# EUROPEAN PATENT SPECIFICATION

(11) **EP 4 760 562 B1**
(45) Date of publication and mention of the grant of the patent: **09.12.2026**
(21) Application number: 25203385.7
(22) Date of filing: 19.09.2025
(51) Int. Cl.: G06F 21/55, G06F 21/57, H04L 9/40

(54) **METHOD AND SYSTEM FOR DYNAMICALLY MANAGING INTRUSION WITH SECURE CONTEXT AWARE OVER THE AIR UPDATE**
VERFAHREN UND SYSTEM ZUR DYNAMISCHEN VERWALTUNG DES EINDRINGENS MIT SICHERER KONTEXTBEWUSSTER FUNKAKTUALISIERUNG
PROCÉDÉ ET SYSTÈME DE GESTION DYNAMIQUE D'INTRUSIONS AVEC PRISE EN COMPTE DU CONTEXTE SÉCURISÉ SUR LA MISE À JOUR RADIO

(30) Priority: 16.12.2024 IN 202421099638
(43) Date of publication of application: 17.06.2026
(73) Proprietor: Tata Consultancy Services Limited, Maharashtra (IN)
(72) Inventor: CHAKRABORTY, Ankur, 700091 Kolkata, West Bengal, (IN); NASKAR, Soumitra, 700091 Kolkata, West Bengal (IN)
(74) Representative: Goddar, Heinz J.

(56) References cited:
- US-A1- 2019 179 626
- US-A1- 2020 218 531
- US-A1- 2021 211 442

## Description

### CROSS-REFERENCE TO RELATED APPLICATIONS AND PRIORITY

The present application claims priority to Indian application no. 202421099638, filed on December 16, 2024.

### TECHNICAL FIELD

The disclosure herein generally relates to a cybersecurity management, and, more particularly, to method and system for dynamically managing intrusion with secure context aware over the air (OTA) update.

### BACKGROUND

In an automotive ecosystem, modem vehicles such as a software defined vehicle (SDV) are built with large amount of software components for automation. The SDV manages its own operations, adds functionality, and enables new features primarily or entirely through the software components. Typically, the SDVs are enabled with the internet to interact and control one or more interfaces. A telematics control unit (TCU) that provides the network connectivity (e.g., an Ethernet network) in the modem vehicles. Automotive manufacturers are being exposed to a broad range of cyber-attacks directly/indirectly through the software components which are connected in the network environment leading to unwanted events in the automotive ecosystem. Further, a breach of the TCU may allow a malicious party to perform such attacks as remote code execution using an operating system (OS) to compromise safety of vehicle occupants. The malicious party may access and control by a central computing unit i.e., an electronic control unit (ECU) or other devices on the modem vehicle. Privacy principles affirm three important commitments which include (a) transparency to be provided by manufacturers to customers, (b) consent of sensitive customers data, (c) limited sharing of customer data. However, cyber attackers focus on the privacy of data associated with the customers e.g., a supplier code, during the breach. This results in an increased cost allocation for mitigating cybersecurity vulnerabilities in the modem vehicles. Threat surfaces in the SDV correspond to vehicle communication channels, external connectivity and connections, adversarial attacks targeting artificial intelligence (AI) models and features, threats related to update process, original equipment manufacturer (OEM) cloud threats, data loss/data breach from the SDV, and physical manipulation of systems to enable an attack. The impacts of the direct/indirect cybersecurity breach resulting in: (a) affected safe operation in the SDV, (b) disrupted vehicle functions, (c) modified software resulting in altered performance, (d) a data integrity breach, (e) a data confidentiality breach, and (f) a loss of data availability.

To protect against the cyber-attacks, conventional systems have relied upon limited features within the OS to filter out malicious traffic. Typically, intrusion detection system (IDS) checks a network or system for malicious activities or policy violations. To further enhance security, conventional systems have also incorporated a stateful firewall into the TCU. However, the firewall in these systems may also be susceptible to breach and difficult to secure, due to the complexity of network stacks, which often have vulnerabilities.

US2019/179626A1 discloses the OTA update of a vehicle (ECU) software depending detection of an anomaly. The detection may be based on ML techniques.

US2021/211442A1 and US 2020/218531A1 provide further prior art related to OTA updates of vehicles.

### SUMMARY

Embodiments of the present disclosure present technological improvements as solutions to one or more of the above-mentioned technical problems recognized by the inventors in conventional systems. For example, in one embodiment, a processor implemented method of dynamically managing intrusion with secure context aware over the air (OTA) update is provided. The processor implemented method includes: receiving, at an intrusion detection unit (IDU) broker, a data associated with an at least one event detected at a vehicle connected in a network environment; processing, by the intrusion detection unit (IDU), the data associated with the at least one event detected in the vehicle connected in the network environment to classify the at least one event detected either pertains to a normal event or a qualified security event (QSEV); generating, by an adaptive intrusion prevention unit (IPU), an adaptive intrusion prevention unit (IPU) sanitized data to determine one or more appropriate context aware over the air (OTA) updates corresponding to a vulnerability, upon receiving a notification associated with the QSEV by an over the air (OTA) manager; and fetching, from a patch database, information associated with the one or more appropriate context aware OTA updates corresponding to the vulnerability, for mitigation of the corresponding QSEV in the vehicle. The at least one event is detected by at least one intrusion detection unit (IDU) sensor of an intrusion detection unit (IDU). The intrusion detection unit (IDU) is implemented as a distributed system. The adaptive intrusion prevention unit (IPU) sanitized data is communicated to an over the air (OTA) broker in an original equipment manufacturer (OEM) cloud. The step of generating the adaptive intrusion prevention unit (IPU) sanitized data include populating, a knowledge graph for training a contextual analysis model based on one or more input data through which one or more appropriate context aware OTA updates are identified. The one or more input data pertains to at least one of: (a) historical diagnostics (b) historical log analysis, (c) vehicle specification, and (d) security. The OTA manager triggers the one or more appropriate context aware OTA updates to the vehicle connected in the network environment.

In an embodiment, the at least one intrusion detection unit (IDU) sensor integrated with the at least one central computing unit pertains to the distributed system. In an embodiment, a predefined model is generated by at least one central computing unit, based on iteratively training the data associated with the at least one event detected at the vehicle connected in the network environment, with respect to the QSEV based on a supervised machine learning. In an embodiment, a machine learning (ML) confidence score is computed for identifying an vulnerability, by selecting one or more parameters associated with the vulnerability. In an embodiment, one or more parameters pertains to at least one of: (i) a severity of a vulnerability (V), (ii) an affected software version (SV), (iii) a security fix availability (SF), (iv) a dependency on other software component prerequisites (D), (v) a patch testing (PT), and (vi) an update history (UH). In an embodiment, the at least one event detected pertains to the QSEV, if the at least one event detected matches with one or more attributes in a historical data set is prepopulated. In an embodiment, the one or more attributes in the historical data set comprise at least one of: (a) event scope, (b) event context, (c) event impact, (d) event relevance. In an embodiment, the QSEV pertains to an inverse of a function of nearness of the predefined data model. In an embodiment, the predefined data model pertains to a pre trained data set which comprise one or more labels for the QSEV. In an embodiment, an adaptive IPU is placed in a band of main data stream flow, either in a dormant or an inactive state. In an embodiment, the adaptive IPU is a subscriber to the IDU broker. In an embodiment, the adaptive IPU is configured to receive the data from the IDU broker. In an embodiment, an active time of the adaptive IPU increases with an increase in the rate of flow of the QSEV. In an embodiment, the step of populating the knowledge graph for training the contextual analysis model, comprising: (a) populating, a data associated with a historical diagnostics collected through a service-oriented vehicle diagnostics (SOVD) APIs, in a historical diagnostics database; (b) categorizing, one or more logs dumps associated with one or more vehicle specifications through one or more component identification numbers; and (c) categorizing, a relevant data to populate in the knowledge graph for contextualization of the vulnerability mapped, based on one or more data associated with specification of the vehicle. In an embodiment, the SOVD APIs is an application program interface (API) for diagnosing and communicating with the vehicle connected in the network environment. In an embodiment, the historical diagnostics is a flexible standard that provides a uniform access to a diagnostic content of HPCs and corresponding related applications, and one or more ECUs. In an embodiment, the one or more logs dumps are analyzed, and a proper data is collected and pushed to the knowledge graph. In an embodiment, the context aware OTA update is dependent on at least one: (i) an asset custodian consent, (ii) a software compatibility matrix, and (iii) availability of the asset. In an embodiment, the asset pertains to the vehicle connected in the network environment.

In another aspect, there is provided a system for dynamically managing intrusion with secure context aware over the air (OTA) update. The system includes a vehicle connected in a network environment integrated with a distributed intrusion detection and mitigation unit; and an original equipment manufacturer (OEM) cloud, wherein the distributed intrusion detection and mitigation unit comprises: at least one intrusion detection unit (IDU) sensor; at least one central computing unit; a memory storing a plurality of instructions; one or more communication interfaces; and one or more hardware processors coupled to the memory via the one or more communication interfaces, wherein the one or more hardware processors are configured by the instructions to: receive, at an intrusion detection unit (IDU) broker, a data associated with an at least one event detected at the vehicle connected in the network environment; process, by the intrusion detection unit (IDU), the data associated with the at least one event detected in the vehicle connected in the network environment to classify the at least one event detected either pertains to a normal event or a qualified security event (QSEV); generate, by an adaptive intrusion prevention unit (IPU), an adaptive intrusion prevention unit (IPU) sanitized data to determine one or more appropriate context aware over the air (OTA) updates corresponding to a vulnerability, upon receiving a notification associated with the QSEV by an over the air (OTA) manager; and fetch, from a patch database, information associated with the one or more appropriate context aware OTA updates corresponding to the vulnerability, for mitigation of the corresponding QSEV in the vehicle. The at least one event is detected by at least one intrusion detection unit (IDU) sensor of an intrusion detection unit (IDU). The intrusion detection unit (IDU) is implemented as a distributed system. The adaptive intrusion prevention unit (IPU) sanitized data is communicated to an over the air (OTA) broker in an original equipment manufacturer (OEM) cloud. The step of generating the adaptive intrusion prevention unit (IPU) sanitized data include populating, a knowledge graph for training a contextual analysis model based on one or more input data through which one or more appropriate context aware OTA updates are identified. The one or more input data pertains to at least one of: (a) historical diagnostics (b) historical log analysis, (c) vehicle specification, and (d) security. The OTA manager triggers the one or more appropriate context aware OTA updates to the vehicle connected in the network environment.

In an embodiment, the at least one intrusion detection unit (IDU) sensor integrated with the at least one central computing unit pertains to the distributed system. In an embodiment, a predefined model is generated by at least one central computing unit, based on iteratively training the data associated with the at least one event detected at the vehicle connected in the network environment, with respect to the QSEV based on a supervised machine learning. In an embodiment, a machine learning (ML) confidence score is computed for identifying an vulnerability, by selecting one or more parameters associated with the vulnerability. In an embodiment, one or more parameters pertains to at least one of: (i) a severity of a vulnerability (V), (ii) an affected software version (SV), (iii) a security fix availability (SF), (iv) a dependency on other software component prerequisites (D), (v) a patch testing (PT), and (vi) an update history (UH). In an embodiment, the at least one event detected pertains to the QSEV, if the at least one event detected matches with one or more attributes in a historical data set is prepopulated. In an embodiment, the one or more attributes in the historical data set comprise at least one of: (a) event scope, (b) event context, (c) event impact, (d) event relevance. In an embodiment, the QSEV pertains to an inverse of a function of nearness of the predefined data model. In an embodiment, the predefined data model pertains to a pre trained data set which comprise one or more labels for the QSEV. In an embodiment, an adaptive IPU is placed in a band of main data stream flow, either in a dormant or an inactive state. In an embodiment, the adaptive IPU is a subscriber to the IDU broker. In an embodiment, the adaptive IPU is configured to receive the data from the IDU broker. In an embodiment, an active time of the adaptive IPU increases with an increase in the rate of flow of the QSEV. In an embodiment, the step of populating the knowledge graph for training the contextual analysis model, comprising: (a) populating, a data associated with a historical diagnostics collected through a service-oriented vehicle diagnostics (SOVD) APIs, in a historical diagnostics database; (b) categorizing, one or more logs dumps associated with one or more vehicle specifications through one or more component identification numbers; and (c) categorizing, a relevant data to populate in the knowledge graph for contextualization of the vulnerability mapped, based on one or more data associated with specification of the vehicle. In an embodiment, the SOVD APIs is an application program interface (API) for diagnosing and communicating with the vehicle connected in the network environment. In an embodiment, the historical diagnostics is a flexible standard that provides a uniform access to a diagnostic content of HPCs and corresponding related applications, and one or more ECUs. In an embodiment, the one or more logs dumps are analyzed, and a proper data is collected and pushed to the knowledge graph. In an embodiment, the context aware OTA update is dependent on at least one: (i) an asset custodian consent, (ii) a software compatibility matrix, and (iii) availability of the asset. In an embodiment, the asset pertains to the vehicle connected in the network environment.

In yet another aspect, a non-transitory computer readable medium for comprising one or more instructions which when executed by one or more hardware processors causes at least one of: receiving, at an intrusion detection unit (IDU) broker, a data associated with an at least one event detected at a vehicle connected in a network environment; processing, by the intrusion detection unit (IDU), the data associated with the at least one event detected in the vehicle connected in the network environment to classify the at least one event detected either pertains to a normal event or a qualified security event (QSEV); generating, by an adaptive intrusion prevention unit (IPU), an adaptive intrusion prevention unit (IPU) sanitized data to determine one or more appropriate context aware over the air (OTA) updates corresponding to a vulnerability, upon receiving a notification associated with the QSEV by an over the air (OTA) manager; and fetching, from a patch database, information associated with the one or more appropriate context aware OTA updates corresponding to the vulnerability, for mitigation of the corresponding QSEV in the vehicle. The at least one event is detected by at least one intrusion detection unit (IDU) sensor of an intrusion detection unit (IDU). The intrusion detection unit (IDU) is implemented as a distributed system. The adaptive intrusion prevention unit (IPU) sanitized data is communicated to an over the air (OTA) broker in an original equipment manufacturer (OEM) cloud. The step of generating the adaptive intrusion prevention unit (IPU) sanitized data include populating, a knowledge graph for training a contextual analysis model based on one or more input data through which one or more appropriate context aware OTA updates are identified. The one or more input data pertains to at least one of: (a) historical diagnostics (b) historical log analysis, (c) vehicle specification, and (d) security. The OTA manager triggers the one or more appropriate context aware OTA updates to the vehicle connected in the network environment.

In an embodiment, the at least one intrusion detection unit (IDU) sensor integrated with the at least one central computing unit pertains to the distributed system. In an embodiment, a predefined model is generated by at least one central computing unit, based on iteratively training the data associated with the at least one event detected at the vehicle connected in the network environment, with respect to the QSEV based on a supervised machine learning. In an embodiment, a machine learning (ML) confidence score is computed for identifying an vulnerability, by selecting one or more parameters associated with the vulnerability. In an embodiment, one or more parameters pertains to at least one of: (i) a severity of a vulnerability (V), (ii) an affected software version (SV), (iii) a security fix availability (SF), (iv) a dependency on other software component prerequisites (D), (v) a patch testing (PT), and (vi) an update history (UH). In an embodiment, the at least one event detected pertains to the QSEV, if the at least one event detected matches with one or more attributes in a historical data set is prepopulated. In an embodiment, the one or more attributes in the historical data set comprise at least one of: (a) event scope, (b) event context, (c) event impact, (d) event relevance. In an embodiment, the QSEV pertains to an inverse of a function of nearness of the predefined data model. In an embodiment, the predefined data model pertains to a pre trained data set which comprise one or more labels for the QSEV. In an embodiment, an adaptive IPU is placed in a band of main data stream flow, either in a dormant or an inactive state. In an embodiment, the adaptive IPU is a subscriber to the IDU broker. In an embodiment, the adaptive IPU is configured to receive the data from the IDU broker. In an embodiment, an active time of the adaptive IPU increases with an increase in the rate of flow of the QSEV. In an embodiment, the step of populating the knowledge graph for training the contextual analysis model, comprising: (a) populating, a data associated with a historical diagnostics collected through a service-oriented vehicle diagnostics (SOVD) APIs, in a historical diagnostics database; (b) categorizing, one or more logs dumps associated with one or more vehicle specifications through one or more component identification numbers; and (c) categorizing, a relevant data to populate in the knowledge graph for contextualization of the vulnerability mapped, based on one or more data associated with specification of the vehicle. In an embodiment, the SOVD APIs is an application program interface (API) for diagnosing and communicating with the vehicle connected in the network environment. In an embodiment, the historical diagnostics is a flexible standard that provides a uniform access to a diagnostic content of HPCs and corresponding related applications, and one or more ECUs. In an embodiment, the one or more logs dumps are analyzed, and a proper data is collected and pushed to the knowledge graph. In an embodiment, the context aware OTA update is dependent on at least one: (i) an asset custodian consent, (ii) a software compatibility matrix, and (iii) availability of the asset. In an embodiment, the asset pertains to the vehicle connected in the network environment.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a distributed intrusion management system for dynamically managing intrusion based on one or more events and corresponding secure context aware over the air (OTA) update, according to an embodiment of the present disclosure.
FIG. 2 is a functional block diagram of the distributed intrusion management system of the FIG. 1 for dynamically managing intrusion based on the one or more events and the corresponding secure context aware over the air (OTA) update, according to an embodiment of the present disclosure.
FIG. 3A is a functional block diagram of a package management unit of the distributed intrusion management system of the FIG. 1, according to an embodiment of the present disclosure.
FIG. 3B is a functional block diagram of an intrusion detection and mitigation unit of the distributed intrusion management system of the FIG. 1, according to an embodiment of the present disclosure.
FIG. 3C is a functional block diagram of an original equipment manufacturer (OEM) cloud of the distributed intrusion management system of the FIG. 1, according to an embodiment of the present disclosure.
FIG. 3D is a functional block diagram of a security event contextualization unit of the distributed intrusion management system of the FIG. 1, according to an embodiment of the present disclosure.
FIG. 4A is a graphical representation of a qualified security events (QSEV) data range, according to an embodiment of the present disclosure.
FIG. 4B is a graphical representation depicting an active time of an adaptive intrusion prevention unit (IPU), according to an embodiment of the present disclosure.
FIG. 5A is a functional block diagram depicting a process of populating a knowledge graph for a contextual analysis model training, according to an embodiment of the present disclosure.
FIG. 5B is a functional block diagram depicting a process of populating a historical diagnostics as an input to the knowledge graph, according to an embodiment of the present disclosure.
FIG. 6A-FIG. 6B are exemplary flow diagrams illustrating the method of dynamically managing intrusion based on one or more events and corresponding secure context aware over the air (OTA) update, according to an embodiment of the present disclosure.
FIG. 6C is an exemplary flow diagram illustrating the method of dynamically managing intrusion based on one or more events and corresponding secure context aware over the air (OTA) update, according to an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There is a need to make the automobile industry more efficient with respect to resilience against cyber exploits. Embodiment of a present disclosure provides a distributed intrusion management system to mitigate cybersecurity vulnerabilities in a vehicle e.g., software defined vehicles (SDV) connected in a network environment based on one or more events and corresponding secure context aware over the air (OTA) update. The distributed intrusion management system includes an intrusion detection unit (IDU) with an adaptive intrusion prevention unit (IPU). The intrusion detection unit (IDU) is implemented as a distributed system. An intrusion detection unit (IDU) sensor integrated with an electronic control unit (ECU) (304B) pertains to the distributed system. For example, the distribution system pertains to an electrical/electronic (E/E) architecture of a vehicle, i.e., one intrusion detection unit (IDU) sensor is dedicated to one ECU. In an embodiment, the intrusion detection unit (IDU) is alternatively referred to a distributed intrusion detection unit (DIDU). Each ECU is associated with an intrusion detection unit (IDU) processor, an intrusion detection unit (IDU) manager and an intrusion detection unit (IDU) reporter. The distributed intrusion detection unit (DIDU) qualifies a true security event and triggers the adaptive intrusion prevention unit (IPU). The adaptive intrusion prevention unit (IPU) is placed in a band of main data stream flow, in dormant/inactive state, once triggered, prevents the event and reports to an original equipment manufacturer (OEM) SOC.

The distributed intrusion management system in which the one or more intrusion detection unit (IDU) sensors are integrated with one or more electronic control units (ECUs) to detect one or more events e.g., a security event during an attacker intrudes a vehicle. The one or more events are analyzed if true or not and transfers the analyzed data to security operation center which responds back for system resilience by providing a mitigation support with the corresponding secure context aware over the air (OTA) update. The distributed intrusion management system is patched with the secure context aware over the air (OTA) update, when an abnormal event is detected by the distributed IDU and the adaptive IPU. The adaptive IPU is made active or inactive based on detection of one or more qualified security events. Initially, the adaptive IPU is configured in the dormant position. The IDU triggers and enables the adaptive IPU from the dormant into an active position, upon detection of the one or more qualified security events in the distributed IDU, thereby efficiently mitigate cyber-attacks on the SDV. The context aware OTA enables an OTA manager of the original equipment manufacturer (OEM) to initiate a security patch after getting notified by the adaptive IPU.

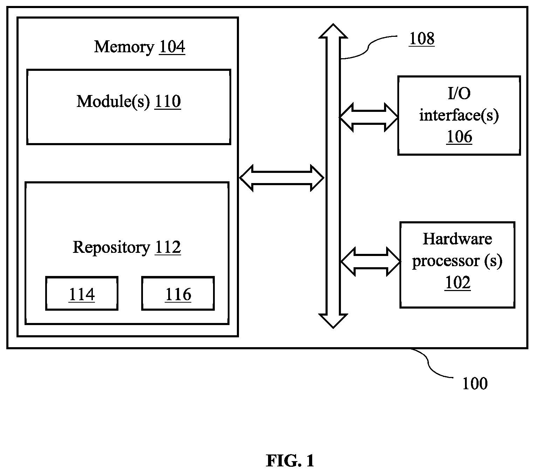

Referring now to the drawings, and more particularly to FIGS. 1 through 6C, where similar reference characters denote corresponding features consistently throughout the figures, there are shown preferred embodiments, and these embodiments are described in the context of the following exemplary system and/or method.

FIG. 1 illustrates the distributed intrusion management system 100 for dynamically managing intrusion based on one or more events and corresponding secure context aware over the air (OTA) update, according to an embodiment of the present disclosure. In an embodiment, the system 100 includes one or more processor(s) 102, communication interface device(s) or input/output (I/O) interface(s) 106, and one or more data storage devices or memory 104 operatively coupled to the one or more processors 102. The memory 104 includes a database. The one or more processor(s) processor 102, the memory 104, and the I/O interface(s) 106 may be coupled by a system bus such as a bus 108 or a similar mechanism. The one or more processor(s) 102 that are hardware processors can be implemented as one or more microprocessors, microcomputers, microcontrollers, digital signal processors, central processing units, state machines, logic circuitries, and/or any devices that manipulate signals based on operational instructions. Among other capabilities, the one or more processor(s) 102 is configured to fetch and execute computer-readable instructions stored in the memory 104. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like. The I/O interface device(s) 106 may include a variety of software and hardware interfaces, for example, interfaces for peripheral device(s), such as a keyboard, a mouse, an external memory, a camera device, and a printer. Further, the I/O interface device(s) 106 may enable the system 100 to communicate with other devices, such as web servers and external databases. The I/O interface device(s) 106 can facilitate multiple communications within a wide variety of networks and protocol types, including wired networks, for example, local area network (LAN), cable, etc., and wireless networks, such as Wireless LAN (WLAN), cellular, or satellite. In an embodiment, the I/O interface device(s) 106 can include one or more ports for connecting number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 110 and a repository 112 for storing data processed, received, and generated by the plurality of modules 110. The plurality of modules 110 may include routines, programs, objects, components, data structures, and so on, which perform particular tasks or implement particular abstract data types.

Further, the database stores information pertaining to inputs fed to the system 100 and/or outputs generated by the system (e.g., data/output generated at each stage of the data processing) 100, specific to the methodology described herein. More specifically, the database stores information being processed at each step of the proposed methodology.

Additionally, the plurality of modules 110 may include programs or coded instructions that supplement applications and functions of the system 100. The repository 112, amongst other things, includes a system database 114 and other data 116. In an embodiment, the repository 112 may further include an intrusion detection unit (IDU)_database 310 and a patch database 314. The other data 116 may include data generated as a result of the execution of one or more modules in the plurality of modules 110. Herein, the memory, for example the memory 104 and the computer program code configured to, with the hardware processor for example the processor 102, causes the system 100 to perform various functions described herein under.

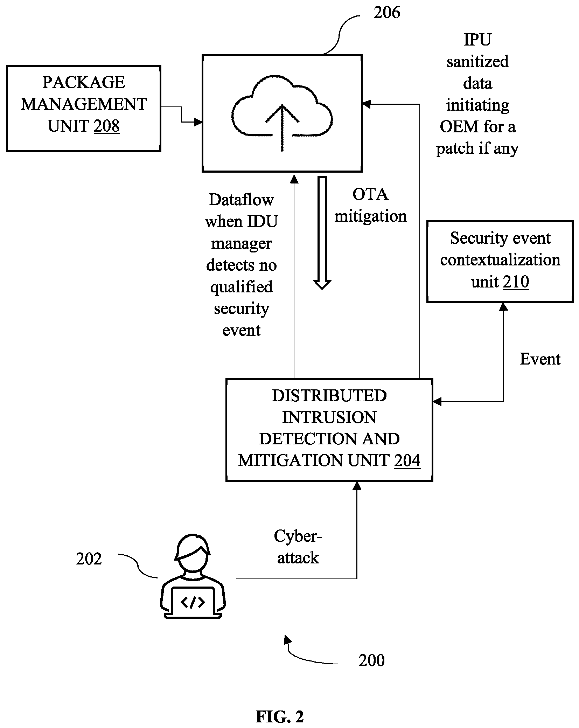

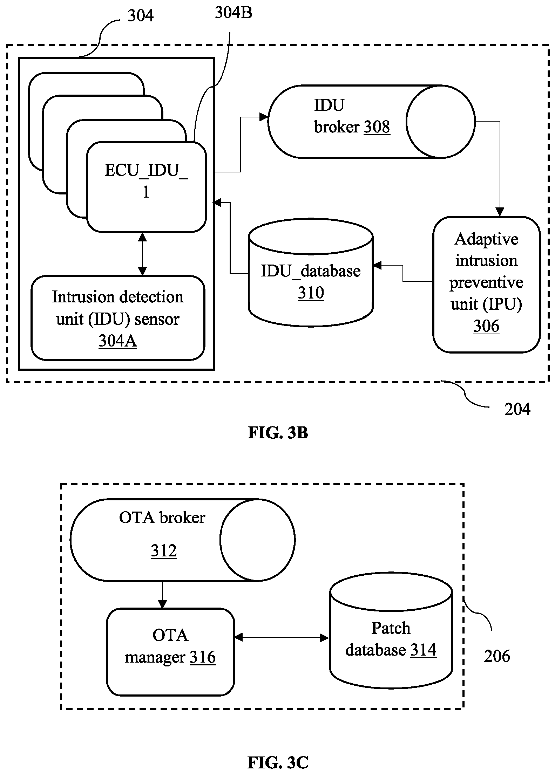

FIG. 2 is a functional block diagram of the distributed intrusion management system 200 of the FIG. 1 for dynamically managing intrusion based on the one or more events and the corresponding secure context aware over the air (OTA) update, according to an embodiment of the present disclosure. In an embodiment, the context aware over the air (OTA) update is alternatively referred as an appropriate patch. In an exemplary embodiment, the distributed intrusion management system 100 is alternatively referred to the distributed intrusion management system 200. The distributed intrusion management system 200 includes a cyber-attacker 202, an distributed intrusion detection and mitigation unit 204, an original equipment manufacturer (OEM) cloud 206, an package management unit 208, and a security event contextualization unit 210. With reference to FIG. 3B is a functional block diagram of the intrusion detection and mitigation unit 204 of the distributed intrusion management system 200 of the FIG. 1, according to an embodiment of the present disclosure. The distributed intrusion detection and mitigation unit 204 includes (a) a distributed intrusion detection unit (DIDU) 304 in which one or more intrusion detection unit (IDU) sensors 304A are integrated with the one or more electronic control units (ECUs) 304B, (b) an adaptive intrusion prevention unit (IPU) 306, (c) an intrusion detection unit (IDU) broker 308, and (d) the IDU_database 310. In an embodiment, the distributed intrusion detection unit (DIDU) 304, the adaptive intrusion prevention unit (IPU) 306, the intrusion detection unit (IDU) broker 308, and the IDU_database 310 may be embedded in a close proximity of the SDV, or in a remote location. In an alternate embodiment, the distributed intrusion detection unit (DIDU) 304, the adaptive intrusion prevention unit (IPU) 306, the intrusion detection unit (IDU) broker 308, and the IDU_database 310 are remotely accessed.

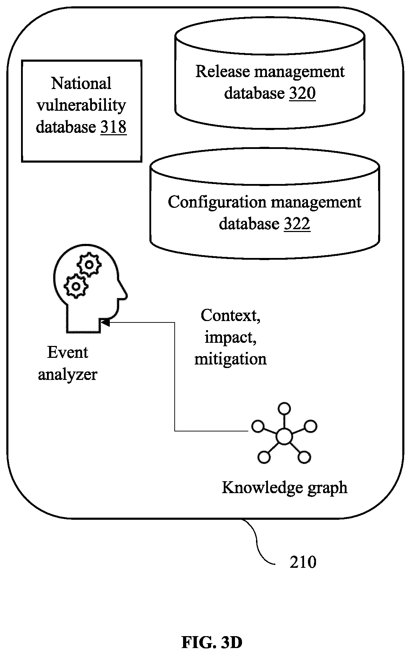

The intrusion detection and mitigation unit 204 is configured to detect one or more events. The IDU processor or the intrusion detection unit (IDU) sensors 304A detects the one or more events and share with the IDU broker 308. An event analyzer (as depicted in FIG. 3D) performs a check operation, to classify if the one or more events are either pertains to one or more false positive events e.g., a normal event, or a true security event e.g., a qualified security event (QSEV). A malicious data is injected by the cyber-attacker 202 to intrude the SDV. The qualified security event is detected, and reported to a OEM SOC. The distributed IDU 304 detects the event based on one or more pre-defined rules, e.g., one or more pre-defined rules are defined as: (a) an automotive network may not allow an internet control message protocol (ICMP) traffic, or (b) alternatively, an event is reported on detection of the ICMP traffic. In an embodiment, the detected abnormal event may not be the true security event. For example, an event is qualified as the qualified security event (QSEV), when a historical data set is prepopulated. In an embodiment, one or more attributes in the historical data set includes an event scope, event context, event impact, event relevance/security event (yes/no), and the like. If a detected event by the distributed IDU 304 and the historical data set matches, then the detected event is termed as the qualified security event (QSEV). The QSEV data is checked with a nearest set of data of the available historical data set and considered as a new set of data, if the detected event may not be an existing data available in the historical data set. Then, population of the data associated with corresponding event is demanded, and triggered and the abnormality is reported to a vehicle custodian/OEM. In an embodiment, a distributed intrusion detection unit algorithm works on a supervised machine learning based data where a predefined model is already prepared and stored in the integrated IDU of the vehicle ECU. If the intruded data does not satisfy the predefined model and a data pattern corresponds to an abnormal data set coordinates, then the event is qualified security event (QSEV). 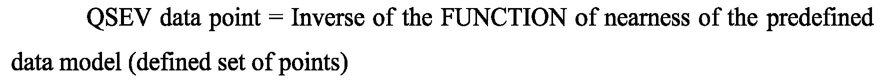 QSEV data point = Inverse of the FUNCTION of nearness of the predefined data model (defined set of points) where the predefined data model is a pre trained data set which includes one or more labels for the QSEV, and the predefined data model is prepopulated through industry standard datasets like mitre.org, a national vulnerability database (NVD) etc. In an embodiment, a range for the predefined data model may vary based on population of data and a threshold.

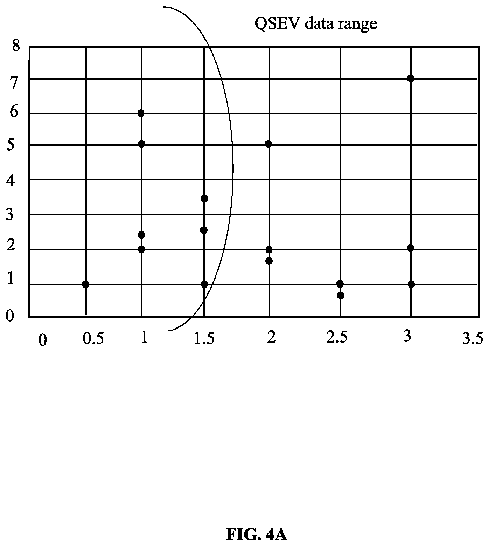

FIG. 4A is a graphical representation of the qualified security events (QSEV) data range, according to an embodiment of the present disclosure. As depicted, the left side of the curve represents one or more false positive events and are not treated as qualified security events (QSEV).

The adaptive intrusion prevention unit (IPU) 306 is placed in a band of main data stream flow, in dormant/inactive state and is a subscriber to the IDU broker 308. The adaptive intrusion prevention unit (IPU) 306 is configured to receive the malicious data which is tagged as the qualified security event from the IDU broker 308. The adaptive IPU 306 prevents the malicious data and pushes the data pattern to the IDU_database 310. The data pattern is defined as a future look up for the data associated with the security event, and data flow is prevented at the perimeter itself by the distributed IDU 304. For example, the data pattern is expressed as follows:
any any -> any any (msg:"ICMP connection attempt"; sid:1000010; rev:1;)

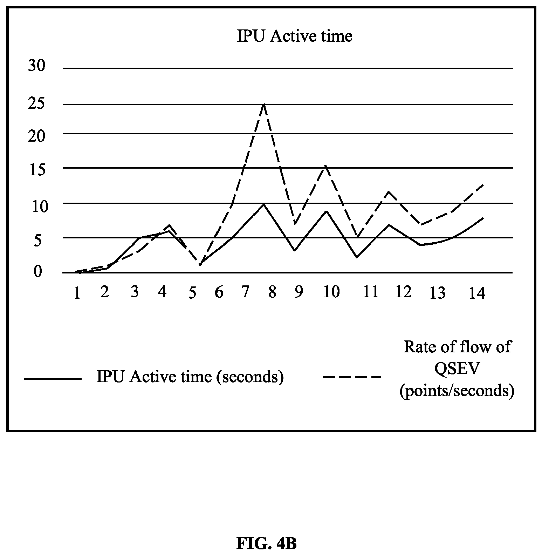

FIG. 4B is a graphical representation depicting an active time of the adaptive IPU 306, according to an embodiment of the present disclosure. The active time of the adaptive IPU 306 increases with an increase in the rate of flow of the QSEV and vice versa. The adaptive IPU 306 acts in an event driven manner and in real time mode. The IPU active time is directly associated with the resource utilization and flow of qualified security event.
IPU Active Time = Function of rate of flow of the QSEV data point, i.e., more the QSEV data point, then more time the adaptive IPU 306 are active.

Once the true security event is detected, the over the air (OTA) manager 316 receives notification of an anticipated attack, and fetches information associated with the one or more context aware OTA updates corresponding to the vulnerability from the patch database 314 to mitigate the triggered security threat in the vehicle. The distributed IDU 304 triggers the adaptive IPU 306, to send an IPU sanitized data to an over the air (OTA) broker 312 in the OEM cloud 206 for the context aware OTA update. In an embodiment, once mitigation is availed the same is pushed to a vehicle ECU in a context aware manner. With reference to FIG. 3C is a functional block diagram of an original equipment manufacturer (OEM) cloud 206 of the distributed intrusion management system 200 of the FIG. 1, according to an embodiment of the present disclosure. The original equipment manufacturer (OEM) cloud 206 includes the over the air (OTA) broker 312, the patch database 314, and the over the air (OTA) manager 316. The OTA manager 316 syncs up with a time server to avoid malfunction with any expired over the air (OTA) software packages. The OTA manager 316 maintains one or more secure contextual OTA updates (e.g., an OTA patch update for any abnormalities reported by the distributed intrusion detection unit (DIDU) 304). The electronic control unit (ECU) 304B authenticates with a Know Your Machine (KYMC) details (e.g., a vehicle identifier (ID) or a vehicle manifest, which contains a unique identification information of an asset) by the OEM cloud 206. In an embodiment, a private cloud associated with one or more OTA components is set by the OEM, post registering with a machine to machine service provider (M2MSP). The one or more OTA components associated with the private cloud interacts with each other through a private application program interface (API).

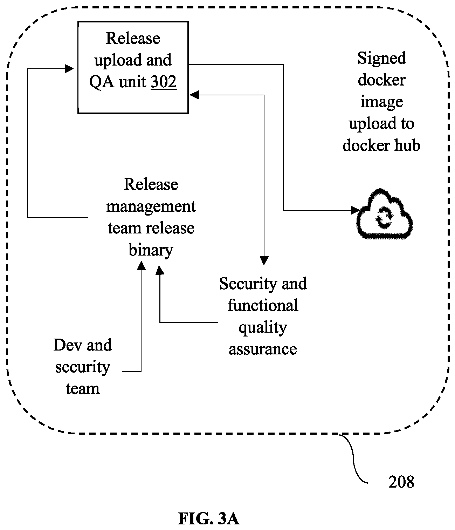

With reference to FIG. 3A is a functional block diagram of a package management unit 208 of the distributed intrusion management system 200 of the FIG. 1, according to an embodiment of the present disclosure. The package management unit 208 further includes a release upload and QA unit 302. The package management unit 208 receives one or more signed over the air (OTA) software packages which are shared by suppliers (e.g., Tier1, Tier2, Tier3) to the original equipment manufacturer (OEM) for the OTA updates. In an embodiment, before sharing, the one or more OTA software packages are built after going through a secure CI/CD cycle which includes a security and functional quality assurance. For example, the one or more signed OTA software packages are authenticated by one or more public keys. In an embodiment, one or more public APIs are made available by the OTA manager 316. The one or more ECUs is configured to pull associated one or more OTA software packages or firmware images in a defined time interval through the one or more available APIs. Then, the one or more pulled OTA software packages are pushed by the OTA manager 316 to the one or more ECUs of the SDV based on context aware scenarios. The primary ECU in the vehicle sends the vehicle manifest information containing identity of the vehicle, and existing OTA software packages if available in the ECU to the OTA manager 316.

The OTA manager 316 looks up in an authentication and inventory database or an over the air (OTA) repository in the OEM cloud 206, and the one or more pulled OTA software packages is signed for the authentication, and next available OTA software packages to be updated. In an embodiment, if there is a lag in the vehicle updates the OTA manager 316 goes ahead with the same, even if there are multiple OTA packages to be processed and pushed. The contextual OTA update is also backed by information of campaigns for software update raised for the specific vehicle i.e., if there are scheduled campaigns for software updates, then OTA manager 316 accelerates the process for a further time interval. The authentication and inventory database responds to the OTA manager 316 with an identifier associated with the one or more software packages to be updated for the mentioned vehicle. The OTA manager 316 further looks up in an image repository and pulls the image to be updated. The OTA manager 316 also syncs up with a local time server for checking an expiry of the one or more pulled OTA software packages and a validity of the one or more pulled OTA software packages. A machine to machine (M2M) service provider helps in updating the KYMC data with the a machine to machine (M2M) syncer (Not shown in FIGURE).

In an embodiment, the predefined data model is a collection of a rule set and the data pattern which vary as per requirement of the OEM cloud 206. In an embodiment, the predefined data model is distinct for each ECU. Upon considering the issue as the qualified security event, alerts are triggered to the vehicle custodian and the OEMS for vehicle diagnostics. The vehicle diagnostics technician is notified and relevant diagnosis of the respective/probable affected components of the vehicle are not initiated. The diagnosis logs are reported to the OEM.

A machine learning (ML) confidence score is computed for a vulnerability check. In an embodiment, the ML confidence score depends on a vendor and corresponding software updates provided for mitigation by a software provider. The ML confidence score is computed by selecting a software package to be updated based on a given vulnerability i.e., a structured approach that considers one or more parameters related to the vulnerability, the software package, and the environment. The one or more parameters pertains to (i) a severity of a vulnerability (V) i.e., based on a common vulnerability scoring system (CVSS) score or a criticality of the vulnerability, (ii) an affected software version (SV) i.e., whether the software package includes versions affected by the vulnerability, (iii) a security fix availability (SF) i.e., whether a security fix is available for the software package, (iv) a dependency on other software component prerequisites (D) i.e., if the software package is part of a larger package, the confidence score may decrease if the fix depends on the other software component, (v) a patch testing (PT) i.e., a stability of one or more previous patches and whether the one or more previous patch are tested in similar environments, and (vi) an update history (UH) i.e., one or more past experiences with updating the software package, e.g., a frequency of breaking changes or compatibility issues.

A weight is assigned to the one or more parameters. For example, the parameters i.e., the severity of the vulnerability (V), and existence of the fix are assigned with maximum weights respectively. Similarly, the parameter i.e., the past update history is assigned with lower weight. The assigned weight for each parameter is as mentioned below:
(a) Severity of vulnerability (V): 0.3
(b) Affected software version (SV): 0.25
(c) Existence of security fix (SF): 0.2
(d) Dependency on other software (D): 0.05
(e) Patch testing and stability (PT): 0.1
(f) Exploit availability (EA): 0.05

In an embodiment, a score is assigned for each parameter, e.g., between 0 and 1. The ML confidence score is computed as multiplying each parameter score by corresponding weight and sum up the output to obtain the ML confidence score. The ML confidence score is expressed as mentioned below: 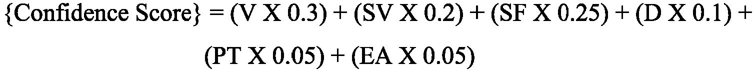 {Confidence Score} = (V X 0.3) + (SV X 0.2) + (SF X 0.25) + (D X 0.1) + (PT X 0.05) + (EA X 0.05)

Further, one or more thresholds are defined to decide whether to proceed with the software package update based on the computed ML confidence score which are expressed as mentioned below:
a) ML confidence Score > 0.8: then high confidence i.e., proceed with the software package update.
b) ML confidence Score 0.6 - 0.8: then medium confidence i.e., to assess the parameters to decide further.
c) ML confidence Score < 0.6: Low confidence i.e., further investigation is needed before software package update.

The ML confidence score is updated periodically in a scheduled time interval on the patch database 314 based on requirement. In an embodiment, if a low machine learning (ML) confidence score is obtained, then no patches are fetched from a vector database. In an embodiment, in a zero patches fetched scenario, the OTA manager 316 generates alerts for more input e.g., common vulnerability and exposure (CVEs) received from the NVD to be trained in the patch database 314. The reported threat is flagged if the patch is not available for corresponding vulnerability then intermediatory patch/software package update is being prepared, and mitigation process is re-iterated by re-pushing the contextual OTA update to the corresponding vulnerability from the patch database 314. In an embodiment, the predefined model considers one or more attributes which helps in considering a security exploit more relevant, and not one or more false positive events. In an embodiment, the one or more attributes are prepopulated from sources such as a national vulnerability database 318.

In an embodiment, a hierarchical orientation is focused on the one or more patches available in the patch database 314. For example, issue are categorized to: (a) "Improper ECU Access Control", (b) "Improper Authentication at the ECU level", (c) "Improper Certificate Validation at the ECU handshake communication level", and (d) "Missing Validation of Open SSL certificate". Accordingly, whenever there is a look up initiated the search filter is optimized and proper results are fetched.

With reference to FIG. 3D, FIG. 3D is a functional block diagram of a security event contextualization unit 210 of the distributed intrusion management system 200 of the FIG. 1, according to an embodiment of the present disclosure. The security event contextualization unit 210 includes the national vulnerability database 318, a release management database 320, a configuration management database 322, and the event analyzer. The release management database 320 stores updated or patched version of software packages which are available in a software component stack of the SDV. The release management database 320 is updated in a frequency of monthly, but the release management database 320 is updated dynamically, if there is an urgent requirement or severity of the vulnerability i.e., in case of urgent fixes / zero day vulnerability remedies. The configuration management database 322 includes a metadata information with respect to the software component stack of the SDV, which is relevant and required at the time of vulnerability contextualization. For example, the metadata information pertaining to a last updated timestamp for a particular software patch, which are relevant at the time of software upgrade to prevent one or more replay attacks in the SDV.

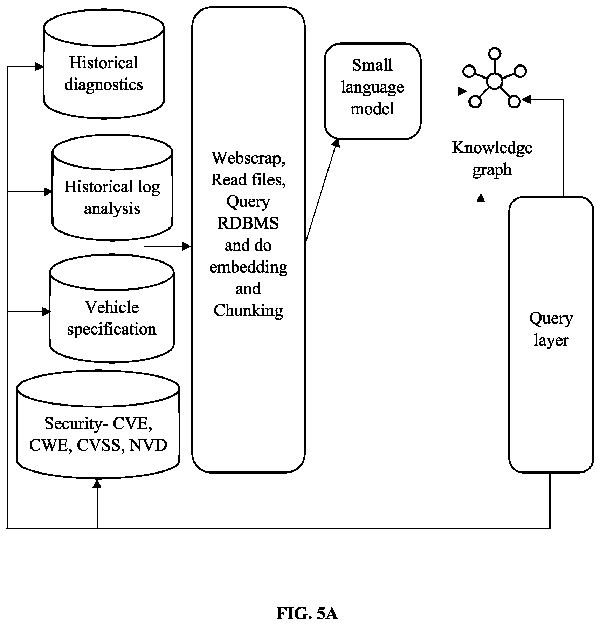

FIG. 5A is a functional block diagram depicting a process of populating the knowledge graph for a contextual analysis model training, according to an embodiment of the present disclosure. The population of the knowledge graph is dependent on one or more input data for example, but are not limited to: (a) historical diagnostics (b) historical log analysis, (c) vehicle specification, and (d) security i.e., the common vulnerability and exposure (CVE), the component vulnerability scoring system (CVSS), a common weakness enumeration (CWE), and the national vulnerability database (NVD) 318.

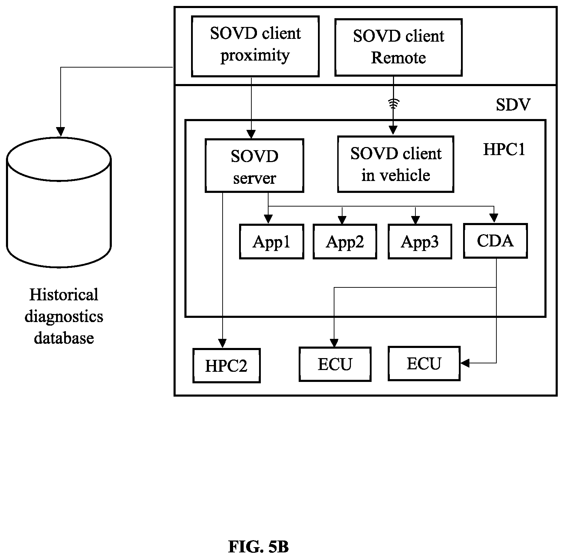

With reference to FIG. 5B, FIG. 5B is a functional block diagram depicting a process of populating a historical diagnostics as an input to the knowledge graph, according to an embodiment of the present disclosure. A service-oriented vehicle diagnostics (SOVD) is defined as an application program interface (API) for diagnosing and communicating with the SDV. The historical diagnostics is a flexible standard that provides a uniform access to a diagnostic content of HPCs and corresponding related applications, as well as of classic ECUs. Whenever the vehicle technician is performing a vehicle fault detection analysis then the fault detection is performed, and fault detection codes i.e., one or more diagnostics trouble code (DTC) standards are captured from the SDV over a service-oriented vehicle diagnostics (SOVD) protocol. The historical diagnostics database is populated from the data collected via the SOVD APIs. In an embodiment, the service-oriented vehicle diagnostics (SOVD) APIs are either local or remotely accessible.

Historical log analysis is performed by requesting one or more log dumps, post performing the historical diagnostics. The one or more logs dumps are categorized through one or more component identification numbers. The one or more logs dumps are analyzed, and a proper data is collected and pushed to a knowledge graph database. The vehicle specification enables to categorize and populate relevant data in the knowledge graph. Based on the vehicle specification the knowledge graph database are used for contextualization of the vulnerability mapped. In an embodiment, the contextualization is performed with mapping of a vehicle software inventory, mapping of one or more software to vehicle components, a potential vulnerability, and one or more cybersecurity semantics.

The qualification of the qualified security event depends on the data abnormality detected by the distributed IDU. A data sanity of the qualified security event is considered with the enforced IDU rule sets, and the data sanity of the one or more OTA software packages or patches is maintained. The standard following vulnerability are mapped to a component vulnerability exposure (CVE) data source, which is a program to identify, define, and catalog publicly disclosed cybersecurity vulnerabilities. The CVE data source corresponds to an identified weakness. In an embodiment, the identified weakness pertains to vulnerability of one or more software components which are listed in the national vulnerability database 318. If the one or more software components are part of the packages deployed in the SDV, then the SDV is potentially vulnerable. The mitigations suggest one or more recommended actions i.e., pushing one or more software update packages to prevent or minimize the vulnerability.

The context aware mitigation via OTA leverages a cyber security knowledge graph with relationships of entities such as vulnerability, threat, exploits, privilege escalation, credential access, discovery, command control, further investigation steps, and mitigation. The OTA manager 316 triggers a "consent campaign" required from the vehicle custodian for the software update. Upon receiving the consent, a proactive roll out of software to be updated in a target SDV and other vehicles in a same group, and vehicles which are considered potential targets, through the OTA update. However, considering the severity and criticality of the issue the consent may not be requested and rather be a forced update. The ontology integration formalizes relationships, ensuring the knowledge graph adheres to one or more cybersecurity standards. In an embodiment, data collection to build the knowledge graph is performed from information provided by one or mor data sources i.e., the national vulnerability database (NVD) 318 which is an international publicly available database, the common vulnerability and exposure (CVE), the component vulnerability scoring system (CVSS) calculators which is a standard for measuring severity of vulnerabilities and prioritizing vulnerability management processes, the common weakness enumeration (CWE) which is a list of software and hardware weaknesses, and logs and mitigation strategies like software version upgrade. Ontology definition is performed to describe a structure of the knowledge graph, outlining one or more nodes and relationships. In an embodiment, queries associated with the knowledge graph are performed to understand the threats associated with the vulnerability, assets affected by the vulnerability, and to find one or more software patches. In an embodiment, the knowledge graph is updated on a regular basis.

Transformation of text to a structured data is performed on one or more security vulnerability updates which are extracted from the national vulnerability database 318 using one or more technique but is not limited to a small language model (SLM) (e.g., scenario i.e., creation of nodes, relationship of the population of the knowledge graph), and a natural language processing (NLP) for activities: (a) data parsing into a structured format, (b) merge data into a common structure, (c) node creation, and entity identification, (d) deduplication of entities. In an embodiment, the ontology model on or more relationships i.e., affects, exploits, etc.

In an embodiment, network theory of betweenness centrality measures the extent to which a node lies on path between other nodes, to identify vulnerabilities that function as bridges between types of attacks or threats of attacks. The betweenness centrality of a node {\display style v} v is given by the expression are as follows: $g \left(v\right) = \ sum _ \left\{\left\{s\neq v\neq t\right\}\right\} \left\{\frac\left\{\sigma_\left\{\left\{st\right\}\right\}\left(v\right)\right\}\left\{/sigma_\left\{\left\{st\right\}\right\}\right\}\right\} ,$ where \sigma_{ st} is the total number of shortest paths from node s to node t and \sigma_ {st} (v) is the number of those paths that pass through v.

Closeness centrality measures how close a node is to all other nodes in a graph for identifying vulnerabilities that could impact quickly due to their centrality. The closeness has been defined by Bavelas as a reciprocal of a farness, given by the expression are as follows: $C \left(x\right) = \left\{\frac \left\{1\right\}\left\{\sum_\left\{y\right\}d\left(y, x\right)\right\}\right\} .$ where d(y,x)is the distance between vertices x and y

In an embodiment, a community detection algorithm is configured to group related vulnerabilities, e.g., a similar affected software. In an embodiment, the small language model for node and relationship identification, by performing a data chunking and is embedded in the knowledge graph database by the SLM. Correlation analysis is performed to identify and measure strength and direction of relationship between the CVE attribute i.e., a severity score, one or more attack vectors, and exploited status. Chi square test is performed to determine if there is a significant association between categorical variables, e.g., the CVE and affected platforms. In an embodiment, one or more entities in the CVE are mapped to ontology defined by the CWE, which supports in relating a CVE with another related CVE. For example, the one or more entities are expressed as follows:
a) U0100 - Lost communication with an engine control module (ECM)/ a powertrain control module (PCM)
b) U0073 - Control module communication bus "A" off
c) U0420 - Invalid data received from the ECM/PCM
d) U0193 - Lost communication with a telematics control unit (TCU)
e) U1234 - Network breach detected

For example, consider a Client A, a webserver B and a database C. Data flow is as follows A--> B-->C. Now B has high betweenness. If B is attacked, data flow of A to C may be intercepted. The vehicle performance APP (i.e., the vehicle performance application (APP)) is B, which explains one or more attacks in the SDV. The ECU is A and cloud is C. An attacker can tamper data of the ECU, send wrong instructions to the ECU. Considering the privacy aspect, the vehicle custodian's consent is always considered whenever data such as vehicle logs, or driver related information is collected.

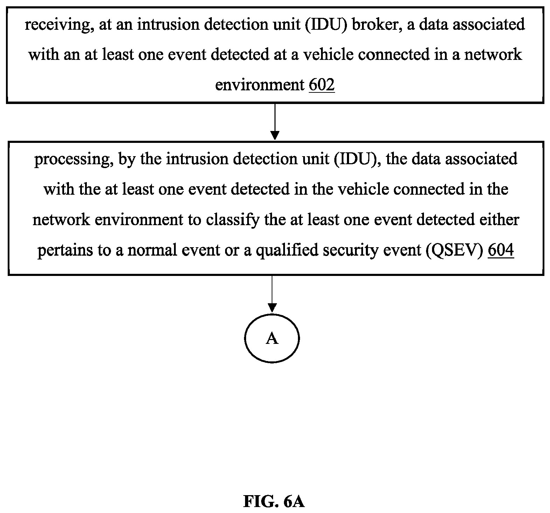

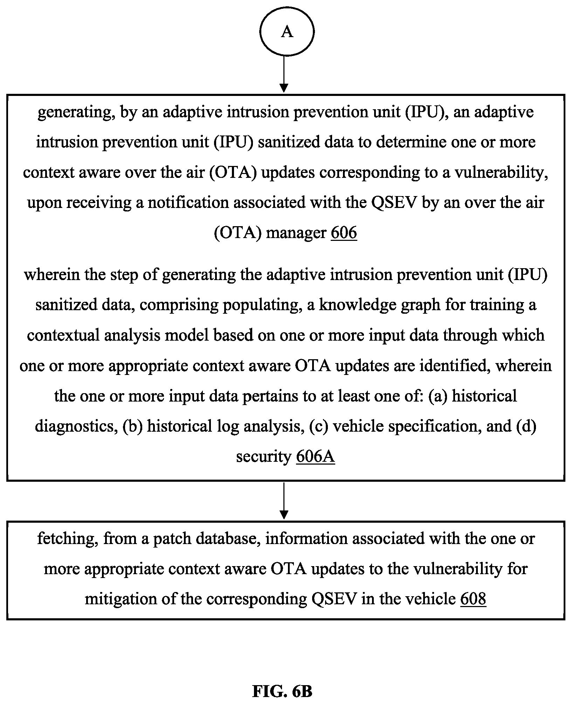

FIG. 6A- FIG. 6B are exemplary flow diagrams illustrating the method of dynamically managing intrusion based on one or more events and corresponding secure context aware over the air (OTA) update, according to an embodiment of the present disclosure. In an embodiment, the system 100 comprises one or more data storage devices or the memory 104 operatively coupled to the one or more hardware processors 102 and is configured to store instructions for execution of steps of the method by the one or more processors 102. The flow diagram depicted is better understood by way of following explanation/description. The steps of the method of the present disclosure will now be explained with reference to the components of the system as depicted in FIG. 1 and FIG. 2.

At step 602, the data associated with the one or more events detected at the vehicle connected in the network environment is received at the intrusion detection unit (IDU) broker 308. The one or more events are detected by the intrusion detection unit (IDU) sensor 304A of the intrusion detection unit (IDU) 304. The intrusion detection unit (IDU) 304 is implemented as the distributed system. In an embodiment, the intrusion detection unit (IDU) sensor 304A integrated with the central computing unit 304B pertains to the distributed system.

At step 604, the data associated with the one or more events detected in the vehicle connected in the network environment is processed by the intrusion detection unit (IDU) 304, to classify the one or more events detected either pertains to the normal event or the qualified security event (QSEV). In an embodiment, the predefined model is generated by the central computing unit 304B, based on iteratively training the data associated with the one or more events detected at the vehicle connected in the network environment, with respect to the QSEV based on the supervised machine learning. In an embodiment, the machine learning (ML) confidence score is computed for identifying the vulnerability, by selecting the one or more parameters associated with the vulnerability. In an embodiment, the one or more parameters pertains to: (i) the severity of the vulnerability (V), (ii) the affected software version (SV), (iii) the security fix availability (SF), (iv) the dependency on other software component prerequisites (D), (v) the patch testing (PT), and (vi) the update history (UH).

At step 606, the adaptive intrusion prevention unit (IPU) sanitized data is generated by the adaptive intrusion prevention unit (IPU) 306, to determine the one or more appropriate context aware over the air (OTA) updates corresponding to the vulnerability, upon receiving the notification associated with the QSEV by the over the air (OTA) manager 316. The adaptive intrusion prevention unit (IPU) sanitized data is communicated to the over the air (OTA) broker 312 in the original equipment manufacturer (OEM) cloud 206. The step of generating the adaptive intrusion prevention unit (IPU) sanitized data includes a step 606A of populating, the knowledge graph for training the contextual analysis model based on the one or more input data through which one or more appropriate context aware OTA updates are identified. The one or more input data pertains to: (a) the historical diagnostics, (b) the historical log analysis, (c) vehicle specification, and (d) the security.

At step 608, the information associated with the one or more context aware OTA updates corresponding to the vulnerability is fetched from the patch database 314 for the mitigation of the corresponding QSEV in the vehicle. The OTA manager 316 triggers the one or more appropriate context aware OTA updates to the vehicle connected in the network environment.

In an embodiment, the one or more events detected pertains to the QSEV, if the one or more events detected matches with the one or more attributes in the historical data set is prepopulated. In an embodiment, the one or more attributes in the historical data set include: (a) the event scope, (b) the event context, (c) the event impact, (d) the event relevance. In an embodiment, the QSEV pertains to the inverse of the function of the nearness of the predefined data model. In an embodiment, the predefined data model pertains to the pre trained data set which include the one or more labels for the QSEV. In an embodiment, the adaptive IPU 306 is placed in the band of main data stream flow, either in the dormant or the inactive state. In an embodiment, the adaptive IPU 306 is the subscriber to the IDU broker 308. In an embodiment, the adaptive IPU 306 is configured to receive the data from the IDU broker 308. In an embodiment, the active time of the adaptive IPU 306 increases with the increase in the rate of flow of the QSEV.

In an embodiment, the step of populating 606A the knowledge graph for training the contextual analysis model, include: (a) populating, the data associated with the historical diagnostics collected through the service-oriented vehicle diagnostics (SOVD) APIs, in the historical diagnostics database; (b) categorizing, the one or more logs dumps associated with the one or more vehicle specifications through the one or more component identification numbers; and (c) categorizing, the relevant data to populate in the knowledge graph for the contextualization of the vulnerability mapped, based on the one or more data associated with specification of the vehicle. In an embodiment, the SOVD APIs is an application program interface (API) for diagnosing and communicating with the vehicle connected in the network environment. In an embodiment, the historical diagnostics is the flexible standard that provides the uniform access to the diagnostic content of HPCs and corresponding related applications, and the one or more ECUs. In an embodiment, the one or more logs dumps are analyzed, and the proper data is collected and pushed to the knowledge graph. In an embodiment, the context aware OTA update is dependent on: (i) the asset custodian consent, (ii) the software compatibility matrix, and (iii) the availability of the asset. In an embodiment, the asset pertains to the vehicle connected in the network environment.

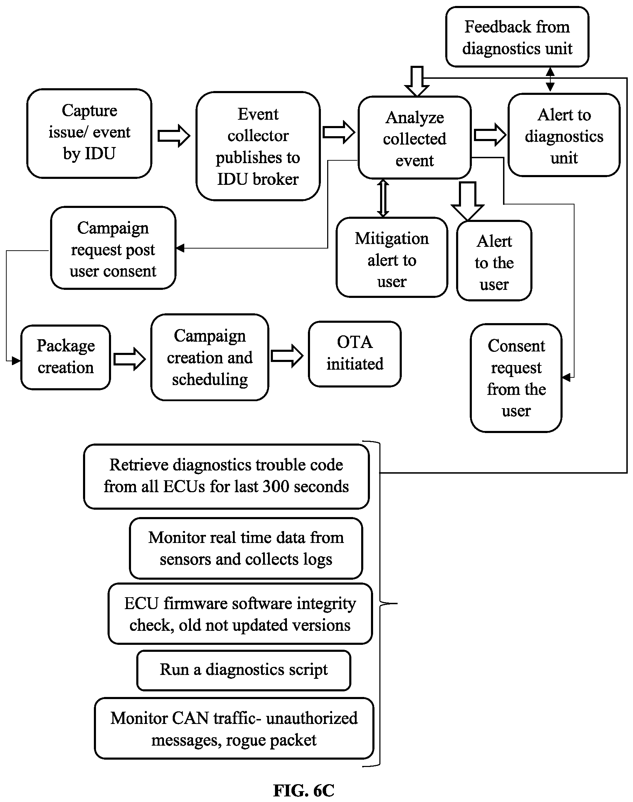

FIG. 6C is an exemplary flow diagram illustrating the method of dynamically managing intrusion based on one or more events and corresponding secure context aware over the air (OTA) update, according to an embodiment of the present disclosure. The steps of determining the mitigation of the one or more threat are as follows: (a) receiving event from the IDU broker 308, (b) reading the "event_description" field from an event JavaScript object notation (JSON), (c) checking for the vulnerability details of the mentioned vulnerability from the knowledge graph database, (d) fetching diagnostic instruction from the knowledge graph database and send as a JSON message to the IDU broker 308 and the message is received by the operator who should be running a diagnostic script on the SDV, and (e) fetching the solution for reported vulnerability from the knowledge graph database, and suggest the remedy along with version of the software to be upgraded in the SDV. In an embodiment, the information is posted in a form of the JSON to the IDU broker 308 which is considered by a campaign management service.

The embodiments of present disclosure herein address unresolved problem of increasing resilience against cyber exploits in the network environment at the modem vehicle. The embodiments of present disclosure thus provide a scalable and distributed intrusion management system with a secure context aware over the air (OTA) update to mitigate the cybersecurity vulnerabilities in the software defined vehicles (SDV). The embodiment of the present disclosure provides a solution for a resource optimization as the adaptive intrusion prevention unit (IPU) is an event driven and is only operational once triggered by the scalable and the distributed intrusion managing system. The adaptive IPU of the distributed intrusion management system is configured active or inactive based on detection of one or more qualified security events. Initially, the adaptive IPU is configured in the dormant position. The IDU triggers and enables the adaptive IPU from the dormant into an active position, upon detection of the one or more qualified security events in the distributed IDU. Then, the context OTA update is initiated for security patching to mitigate cyber-attacks in the SDV in an efficient and cost-effective manner.

The distributed intrusion management system supports maintaining the data privacy and provides safety for the passenger, and thereby ensuring other operational safety measures. The distributed intrusion managing system provides the context aware over the air (OTA) updates to support a vehicle owner for selecting accurate and relevant security packages based on the context in a subscription mode of operation, which also act as an add-on to the cost-effective aspect. The distributed intrusion managing system provides a secure and trusted communication during the OTA updates. The security exploits such as read updates, deny updates, deny functionality, are avoided by the secure context aware OTA update provided with added security measures. The distributed intrusion managing system (a) improves customer experience with safety first assurance, (b) reduces cost associated with security and security debt for the original equipment manufacturer (OEM), and (c) provides a better performance and optimal resource usage. The embodiment of the present disclosure provides the context aware OTA updates linked with software update campaign management process to benefit of the OEMs and help in proactive scheduling of software updates.

The embodiment of the present disclosure relates to proactive impact and patch detection of a vulnerability in an on-board vehicle eco system. The distributed intrusion managing system helps in leveraging economic benefits, security, safety, data privacy, and multiple compliance requirements of automotive. One of the added benefits is reduced security debt which helps in gaining not only safety and security but also getting compliant as per industry standards. The system is trained with respect to qualified security events. The IDU database maintains a database of the qualified security events so that the time of re-detection of similar events is reduced. The OEM leverages the knowledge graph database where one or more security patches are stored in a clubbed/merged, and categorized manner. The OTA manager tokenizes the reported or detected security exploit/event, and look up in the knowledge graph database against matched category, and respond with a faster resolution. The IDU manager considers updated technology stack used in the vehicle and leverages an exploit prediction scoring system (EPSS) for narrowing down on the probability of the exploits on the vehicle. The IDS DB is populated with a very rich knowledge graph which adds to a proactive mitigations on zero day attacks on the SDV. The embodiment of the present disclosure focuses on an ECU synchronization technique which helps in identifying compromised ECUs. The ECUs communicate with each other regularly by sharing secret keys and challenges. If authentication fails then the subject ECU which is not reachable is disconnected and is out of the trust zone. This separation of trust and zero trust architecture helps in proactive mitigation of probable exploits and adds to the resiliency of the system.

The written description describes the subject matter herein to enable any person skilled in the art to make and use the embodiments. The scope of the subject matter embodiments is defined by the claims .

A program and in addition to a computer-readable means having a message therein are discussed; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (600) comprising:
receiving (602), via a one or more hardware processors, at an intrusion detection unit (IDU) broker (308), a data associated with at least one event detected at a vehicle connected in a network environment, wherein the at least one event is detected by at least one intrusion detection unit (IDU) sensor (304A) of an intrusion detection unit (IDU) (304), and wherein the intrusion detection unit (IDU) (304) is implemented as a distributed system;
processing (604), via the one or more hardware processors, by the at least one intrusion detection unit (IDU) (304), the data associated with the at least one event detected in the vehicle connected in the network environment to classify the at least one event detected either pertains to a normal event or a qualified security event (QSEV);
generating (606), via the one or more hardware processors, by an adaptive intrusion prevention unit (IPU) (306), an adaptive intrusion prevention unit (IPU) sanitized data to determine one or more appropriate context aware over the air (OTA) updates corresponding to a vulnerability, upon receiving a notification associated with the QSEV by an over the air (OTA) manager (316), wherein the adaptive intrusion prevention unit (IPU) sanitized data is communicated to an over the air (OTA) broker (312) in an original equipment manufacturer (OEM) cloud (206), and wherein the step of generating the adaptive intrusion prevention unit (IPU) sanitized data, comprising:
populating (606A), a knowledge graph for training a contextual analysis model based on one or more input data through which the one or more appropriate context aware OTA updates are identified, wherein the one or more input data pertains to at least one of: (a) historical diagnostics, (b) historical log analysis, (c) vehicle specification, and (d) security; and
fetching (608), via the one or more hardware processors, from a patch database (314), information associated with the one or more appropriate context aware OTA updates corresponding to the vulnerability, for mitigation of the corresponding QSEV in the vehicle, wherein the OTA manager (316) triggers the one or more appropriate context aware OTA updates to the vehicle connected in the network environment.

2. The processor implemented method (600) as claimed in claim 1, wherein the at least one intrusion detection unit (IDU) sensor (304A) integrated with at least one central computing unit (304B) pertains to the distributed system.

3. The processor implemented method (600) as claimed in claim 1, further comprising generating, by at least one central computing unit (304B), a predefined model based on iteratively training the data associated with the at least one event detected at the vehicle connected in the network environment, with respect to the QSEV based on a supervised machine learning, wherein a machine learning (ML) confidence score is computed for identifying a vulnerability, by selecting one or more parameters associated with the vulnerability, and wherein one or more parameters pertains to at least one of: (i) a severity of a vulnerability (V), (ii) an affected software version (SV), (iii) a security fix availability (SF), (iv) a dependency on other software component prerequisites (D), (v) a patch testing (PT), and (vi) an update history (UH).

4. The processor implemented method (600) as claimed in claim 3, wherein the at least one event detected pertains to the QSEV, if the at least one event detected matches with one or more attributes in a historical data set is prepopulated, wherein the one or more attributes in the historical data set comprise at least one of: (a) event scope, (b) event context, (c) event impact, (d) event relevance, wherein the QSEV pertains to an inverse of a function of nearness of the predefined data model, and wherein the predefined data model pertains to a pre trained data set which comprise one or more labels for the QSEV.

5. The processor implemented method (600) as claimed in claim 1, wherein an adaptive IPU (306) is placed in a band of main data stream flow, either in a dormant or an inactive state, wherein the adaptive IPU (306) is a subscriber to the IDU broker (308), wherein the adaptive IPU (306) is configured to receive the data from the IDU broker (308), and wherein an active time of the adaptive IPU (306) increases with an increase in the rate of flow of the QSEV.

6. The processor implemented method (600) as claimed in claim 1, wherein step of populating (606A) the knowledge graph for training the contextual analysis model comprises:
(a) populating, a data associated with a historical diagnostics collected through a service-oriented vehicle diagnostics (SOVD) APIs, in a historical diagnostics database, wherein the SOVD APIs is an application program interface (API) for diagnosing and communicating with the vehicle connected in the network environment, and wherein the historical diagnostics is a flexible standard that provides a uniform access to a diagnostic content of HPCs and corresponding related applications, and one or more ECUs;
(b) categorizing one or more logs dumps associated with one or more vehicle specifications through one or more component identification numbers, wherein the one or more logs dumps are analyzed, and a proper data is collected and pushed to the knowledge graph; and
(c) categorizing, a relevant data to populate in the knowledge graph for contextualization of the vulnerability mapped, based on one or more data associated with specification of the vehicle.

7. The processor implemented method (600) as claimed in claim 1, wherein the context aware OTA update is dependent on at least one of: . (i) an asset custodian consent, (ii) a software compatibility matrix, and (iii) availability of the asset, and wherein the asset pertains to the vehicle connected in the network environment.

8. A distributed intrusion managing system (100) comprising:
a vehicle connected in a network environment integrated with a distributed intrusion detection and mitigation unit (204); and
an original equipment manufacturer (OEM) cloud (206), wherein the distributed intrusion detection and mitigation unit (204) comprises:
at least one intrusion detection unit (IDU) sensor (304A);
at least one central computing unit (304B);
a memory (104) storing a plurality of instructions;
one or more communication interfaces (106); and
one or more hardware processors (102) coupled to the memory (104) via the one or more communication interfaces (106), wherein the one or more hardware processors (102) are configured by the instructions to:
receive, at an intrusion detection unit (IDU) broker (308), a data associated with at least one event detected at the vehicle connected in the network environment, wherein the at least one event is detected by the at least one intrusion detection unit (IDU) sensor (304A) of an intrusion detection unit (IDU) (304), and wherein the intrusion detection unit (IDU) (304) is implemented as a distributed system;
process, by using the intrusion detection unit (IDU) (304), the data associated with the at least one event detected in the vehicle connected in the network environment to classify the at least one event detected either pertains to a normal event or a qualified security event (QSEV);
generate, by using an adaptive intrusion prevention unit (IPU) (306), an adaptive intrusion prevention unit (IPU) sanitized data to determine one or more appropriate context aware over the air (OTA) updates corresponding to a vulnerability, upon receiving a notification associated with the QSEV by an over the air (OTA) manager (316), wherein the adaptive intrusion prevention unit (IPU) sanitized data is communicated to an over the air (OTA) broker (312) in the original equipment manufacturer (OEM) cloud (206), and wherein the step of generating the adaptive intrusion prevention unit (IPU) sanitized data, comprises:
populate a knowledge graph for training a contextual analysis model based on one or more input data through which the one or more appropriate context aware OTA updates are identified, wherein the one or more input data pertains to at least one of: (a) historical diagnostics, (b) historical log analysis, (c) vehicle specification, and (d) security; and
fetch, from a patch database (314), information associated with the one or more appropriate context aware OTA updates corresponding to the vulnerability, for mitigation of the corresponding QSEV in the vehicle, wherein the OTA manager (316) triggers the one or more appropriate context aware OTA updates to the vehicle connected in the network environment.

9. The distributed intrusion managing system (100) as claimed in claim 8, wherein the at least one intrusion detection unit (IDU) sensor (304A) integrated with the at least one central computing unit (304B) pertains to the distributed system.

10. The distributed intrusion managing system (100) as claimed in claim 8, wherein the one or more hardware processors (102) are configured by the instructions to: generate, by the at least one central computing unit (304B), a predefined model based on iteratively training the data associated with the at least one event detected at the vehicle connected in the network environment, with respect to the QSEV based on a supervised machine learning, wherein a machine learning (ML) confidence score is computed for identifying a vulnerability, by selecting one or more parameters associated with the vulnerability, and wherein one or more parameters pertains to at least one of: (i) a severity of a vulnerability (V), (ii) an affected software version (SV), (iii) a security fix availability (SF), (iv) a dependency on other software component prerequisites (D), (v) a patch testing (PT), and (vi) an update history (UH).

11. The distributed intrusion managing system (100) as claimed in claim 10, wherein the at least one event detected pertains to the QSEV, if the at least one event detected matches with one or more attributes in a historical data set is prepopulated, wherein the one or more attributes in the historical data set comprise at least one of: (a) event scope, (b) event context, (c) event impact, (d) event relevance, wherein the QSEV pertains to an inverse of a function of nearness of the predefined data model, and wherein the predefined data model pertains to a pre trained data set which comprise one or more labels for the QSEV.

12. The distributed intrusion managing system (100) as claimed in claim 8, wherein the adaptive IPU (306) is placed in a band of main data stream flow, either in a dormant or an inactive state, wherein the adaptive IPU (306) is a subscriber to the IDU broker (308), wherein the adaptive IPU (306) is configured to receive the data from the IDU broker (308), and wherein an active time of the adaptive IPU (306) increases with an increase in the rate of flow of the QSEV.

13. The distributed intrusion managing system (100) as claimed in claim 8, wherein step of populating the knowledge graph for training the contextual analysis model comprises:
(a) populating, a data associated with a historical diagnostics collected through a service-oriented vehicle diagnostics (SOVD) APIs, in a historical diagnostics database, wherein the SOVD APIs is an application program interface (API) for diagnosing and communicating with the vehicle connected in the network environment, and wherein the historical diagnostics is a flexible standard that provides a uniform access to a diagnostic content of HPCs and corresponding related applications, and one or more ECUs;
(b) categorizing, one or more logs dumps associated with one or more vehicle specifications through one or more component identification numbers, wherein the one or more logs dumps are analyzed, and a proper data is collected and pushed to the knowledge graph; and
(c) categorizing, a relevant data to populate in the knowledge graph for contextualization of the vulnerability mapped, based on one or more data associated with specification of the vehicle.

14. The distributed intrusion managing system (100) as claimed in claim 8, wherein the context aware OTA update is dependent on at least one of: (i) an asset custodian consent, (ii) a software compatibility matrix, and (iii) availability of the asset, and wherein the asset pertains to the vehicle connected in the network environment.

15. One or more non-transitory machine-readable information storage mediums comprising one or more instructions which when executed by one or more hardware processors cause:
receiving, at an intrusion detection unit (IDU) broker, a data associated with at least one event detected at a vehicle connected in a network environment, wherein the at least one event is detected by at least one intrusion detection unit (IDU) sensor of an intrusion detection unit (IDU), and wherein the intrusion detection unit (IDU) is implemented as a distributed system;
processing, by the intrusion detection unit (IDU), the data associated with the at least one event detected in the vehicle connected in the network environment to classify the at least one event detected either pertains to a normal event or a qualified security event (QSEV);
generating, by an adaptive intrusion prevention unit (IPU), an adaptive intrusion prevention unit (IPU) sanitized data to determine one or more appropriate context aware over the air (OTA) updates corresponding to a vulnerability, upon receiving a notification associated with the QSEV by an over the air (OTA) manager, wherein the adaptive intrusion prevention unit (IPU) sanitized data is communicated to an over the air (OTA) broker in an original equipment manufacturer (OEM) cloud, and wherein the step of generating the adaptive intrusion prevention unit (IPU) sanitized data comprises:
populating a knowledge graph for training a contextual analysis model based on one or more input data through which the one or more appropriate context aware OTA updates are identified, wherein the one or more input data pertains to at least one of: (a) historical diagnostics, (b) historical log analysis, (c) vehicle specification, and (d) security; and
fetching, from a patch database, information associated with the one or more appropriate context aware OTA updates corresponding to the vulnerability, for mitigation of the corresponding QSEV in the vehicle, wherein the OTA manager triggers the one or more appropriate context aware OTA updates to the vehicle connected in the network environment.

## Patentansprüche

1. Prozessorimplementiertes Verfahren (600), umfassend:
Empfangen (602), über einen oder mehrere Hardwareprozessoren, an einem Intrusionsdetektionseinheit(IDU)-Broker (308), von Daten, die mit mindestens einem Ereignis assoziiert sind, das an einem Fahrzeug detektiert wird, das in einer Netzwerkumgebung verbunden ist, wobei das mindestens eine Ereignis durch mindestens einen Intrusionsdetektionseinheit(IDU)-Sensor (304A) einer Intrusionsdetektionseinheit (IDU) (304) detektiert wird, und wobei die Intrusionsdetektionseinheit (IDU) (304) als ein verteiltes System implementiert ist;
Verarbeiten (604), über den einen oder die mehreren Hardwareprozessoren, durch die mindestens eine Intrusionsdetektionseinheit (IDU) (304), der Daten, die mit dem mindestens einen Ereignis assoziiert sind, das in dem Fahrzeug detektiert wird, das in der Netzwerkumgebung verbunden ist, um das mindestens eine Ereignis zu klassifizieren, das entweder ein normales Ereignis oder ein qualifiziertes Sicherheitsereignis (QSEV) betrifft;
Erzeugen (606), über den einen oder die mehreren Hardwareprozessoren, durch eine adaptive Intrusionsverhinderungseinheit (IPU) (306), von sanitisierten Daten der adaptiven Intrusionsverhinderungseinheit (IPU), um eine oder mehrere geeignete kontextbewusste Over-the-Air(OTA)-Aktualisierungen zu bestimmen, die einer Schwachstelle entsprechen, beim Empfangen einer Benachrichtigung, die mit dem QSEV assoziiert ist, durch einen Over-the-Air(OTA)-Manager (316), wobei die sanitisierten Daten der adaptiven Intrusionsverhinderungseinheit (IPU) an einen Over-the-Air(OTA)-Broker (312) in einer Originalausrüstungshersteller(OEM)-Cloud (206) kommuniziert werden, und wobei der Schritt des Erzeugens der sanitisierten Daten der adaptiven Intrusionsverhinderungseinheit (IPU) Folgendes umfasst:
Ausfüllen (606A) eines Wissensgraphen zum Trainieren eines Kontextanalysemodells basierend auf einem oder mehreren Eingabedaten, durch die die eine oder die mehreren geeigneten kontextbewussten OTA-Aktualisierungen identifiziert werden, wobei die eine oder die mehreren Eingabedaten mindestens eines von Folgendem betreffen: (a) historische Diagnose, (b) historische Protokollanalyse, (c) Fahrzeugspezifikation und (d) Sicherheit; und
Abrufen (608), über den einen oder die mehreren Hardwareprozessoren, aus einer Patch-Datenbank (314), von Informationen, die mit der einen oder den mehreren geeigneten kontextbewussten OTA-Aktualisierungen assoziiert sind, die der Schwachstelle entsprechen, zur Abschwächung des entsprechenden QSEV in dem Fahrzeug, wobei der OTA-Manager (316) die eine oder die mehreren geeigneten kontextbewussten OTA-Aktualisierungen an das Fahrzeug auslöst, das in der Netzwerkumgebung verbunden ist.

2. Prozessorimplementiertes Verfahren (600) nach Anspruch 1, wobei der mindestens eine Intrusionsdetektionseinheit(IDU)-Sensor (304A), der mit mindestens einer zentralen Recheneinheit (304B) integriert ist, das verteilte System betrifft.

3. Prozessorimplementiertes Verfahren (600) nach Anspruch 1, ferner umfassend das Erzeugen, durch mindestens eine zentrale Recheneinheit (304B), eines vordefinierten Modells basierend auf dem iterativen Trainieren der Daten, die mit dem mindestens einen Ereignis assoziiert sind, das an dem Fahrzeug detektiert wird, das in der Netzwerkumgebung verbunden ist, in Bezug auf das QSEV basierend auf einem überwachten maschinellen Lernen, wobei ein Vertrauenswert für maschinelles Lernen (ML) zum Identifizieren einer Schwachstelle berechnet wird, indem ein oder mehrere Parameter ausgewählt werden, die mit der Schwachstelle assoziiert sind, und wobei ein oder mehrere Parameter mindestens eines von Folgendem betreffen: (i) eine Schwere einer Schwachstelle (V), (ii) eine betroffene Softwareversion (SV), (iii) eine Sicherheitsverfügbarkeit (SF), (iv) eine Abhängigkeit von anderen Softwarekomponentenvoraussetzungen (D), (v) ein Patch-Testing (PT) und (vi) eine Aktualisierungshistorie (UH).

4. Prozessorimplementiertes Verfahren (600) nach Anspruch 3, wobei das mindestens eine detektierte Ereignis das QSEV betrifft, wenn das mindestens eine detektierte Ereignis mit einem oder mehreren Attributen in einem historischen Datensatz übereinstimmt, der vorgefüllt ist, wobei das eine oder die mehreren Attribute in dem historischen Datensatz mindestens eines von Folgendem umfassen: (a) Ereignisumfang, (b) Ereigniskontext, (c) Ereignisauswirkung, (d) Ereignisrelevanz, wobei das QSEV eine Umkehrung einer Funktion der Nähe des vordefinierten Datenmodells betrifft, und wobei das vordefinierte Datenmodell einen vortrainierten Datensatz betrifft, der eine oder mehrere Kennzeichnungen für das QSEV umfasst.

5. Prozessorimplementiertes Verfahren (600) nach Anspruch 1, wobei eine adaptive IPU (306) in einem Band des Hauptdatenstromflusses platziert ist, entweder in einem ruhenden oder einem inaktiven Zustand, wobei die adaptive IPU (306) ein Teilnehmer des IDU-Brokers (308) ist, wobei die adaptive IPU (306) konfiguriert ist, um die Daten von dem IDU-Broker (308) zu empfangen, und wobei eine aktive Zeit der adaptiven IPU (306) mit einer Erhöhung der Flussrate des QSEV zunimmt.

6. Prozessorimplementiertes Verfahren (600) nach Anspruch 1, wobei der Schritt des Füllens (606A) des Wissensgraphen zum Trainieren des Kontextanalysemodells Folgendes umfasst:
(a) Füllen von Daten, die mit einer historischen Diagnose assoziiert sind, die durch serviceorientierte Fahrzeugdiagnose(SOVD)-APIs gesammelt wurden, in eine historische Diagnosedatenbank, wobei die SOVD-APIs eine Anwendungsprogrammschnittstelle (API) zum Diagnostizieren und Kommunizieren mit dem Fahrzeug sind, das in der Netzwerkumgebung verbunden ist, und wobei die historische Diagnose ein flexibler Standard ist, der einen einheitlichen Zugang zu einem Diagnoseinhalt von HPCs und entsprechenden verwandten Anwendungen und einer oder mehreren ECUs bereitstellt;
(b) Kategorisieren eines oder mehrerer Protokoll-Dumps, die mit einer oder mehreren Fahrzeugspezifikationen assoziiert sind, durch eine oder mehrere Komponentenidentifikationsnummern, wobei der eine oder die mehreren Protokoll-Dumps analysiert werden und geeignete Daten gesammelt und in den Wissensgraphen geschoben werden; und
(c) Kategorisieren relevanter Daten, die in den Wissensgraphen zur Kontextualisierung der abgebildeten Schwachstelle zu füllen sind, basierend auf einem oder mehreren Daten, die mit der Spezifikation des Fahrzeugs assoziiert sind.

7. Prozessorimplementiertes Verfahren (600) nach Anspruch 1, wobei die kontextbewusste OTA-Aktualisierung von mindestens einem von Folgendem abhängig ist: (i) einer Einwilligung des Vermögensbesitzers, (ii) einer Software-Kompatibilitätsmatrix und (iii) Verfügbarkeit des Vermögens, und wobei sich das Vermögen auf das Fahrzeug bezieht, das in der Netzwerkumgebung verbunden ist.

8. Verteiltes Eindringverwaltungssystem (100), umfassend:
ein Fahrzeug, das in einer Netzwerkumgebung verbunden ist, die mit einer verteilten Intrusionsdetektions- und -minderungseinheit (204) integriert ist; und
eine Originalausrüstungshersteller(OEM)-Cloud (206), wobei die verteilte Intrusionsdetektions- und -minderungseinheit (204) Folgendes umfasst:
mindestens einen Intrusionsdetektionseinheit(IDU)-Sensor (304A);
mindestens eine zentrale Recheneinheit (304B);
einen Speicher (104), der eine Mehrzahl von Anweisungen speichert;
eine oder mehrere Kommunikationsschnittstellen (106); und
einen oder mehrere Hardwareprozessoren (102), die über die eine oder die mehreren Kommunikationsschnittstellen (106) mit dem Speicher (104) gekoppelt sind, wobei der eine oder die mehreren Hardwareprozessoren (102) durch die Anweisungen konfiguriert sind zum:
Empfangen, an einem Intrusionsdetektionseinheit(IDU)-Broker (308), von Daten, die mit mindestens einem Ereignis assoziiert sind, das an dem Fahrzeug detektiert wird, das in der Netzwerkumgebung verbunden ist, wobei das mindestens eine Ereignis durch den mindestens einen Intrusionsdetektionseinheit(IDU)-Sensor (304A) einer Intrusionsdetektionseinheit (IDU) (304) detektiert wird, und wobei die Intrusionsdetektionseinheit (IDU) (304) als ein verteiltes System implementiert ist;
Verarbeiten, unter Verwendung der Intrusionsdetektionseinheit (IDU) (304), der Daten, die mit dem mindestens einen Ereignis assoziiert sind, das in dem Fahrzeug detektiert wird, das in der Netzwerkumgebung verbunden ist, um das mindestens eine Ereignis zu klassifizieren, das entweder ein normales Ereignis oder ein qualifiziertes Sicherheitsereignis (QSEV) betrifft;
Erzeugen, unter Verwendung einer adaptiven Intrusionsverhinderungseinheit (IPU) (306), von sanitisierten Daten der adaptiven Intrusionsverhinderungseinheit (IPU), um eine oder mehrere geeignete kontextbewusste Over-the-Air(OTA)-Aktualisierungen zu bestimmen, die einer Schwachstelle entsprechen, beim Empfangen einer Benachrichtigung, die mit dem QSEV assoziiert ist, durch einen Over-the-Air(OTA)-Manager (316), wobei die sanitisierten Daten der adaptiven Intrusionsverhinderungseinheit (IPU) an einen Over-the-Air(OTA)-Broker (312) in der Originalausrüstungshersteller(OEM)-Cloud (206) kommuniziert werden, und wobei der Schritt des Erzeugens der sanitisierten Daten der adaptiven Intrusionsverhinderungseinheit (IPU) Folgendes umfasst:
Ausfüllen eines Wissensgraphen zum Trainieren eines Kontextanalysemodells basierend auf einem oder mehreren Eingabedaten, durch die die eine oder die mehreren geeigneten kontextbewussten OTA-Aktualisierungen identifiziert werden, wobei die eine oder die mehreren Eingabedaten mindestens eines von Folgendem betreffen: (a) historische Diagnose, (b) historische Protokollanalyse, (c) Fahrzeugspezifikation und (d) Sicherheit; und
Abrufen, aus einer Patch-Datenbank (314), von Informationen, die mit der einen oder den mehreren geeigneten kontextbewussten OTA-Aktualisierungen assoziiert sind, die der Schwachstelle entsprechen, zur Abschwächung des entsprechenden QSEV in dem Fahrzeug, wobei der OTA-Manager (316) die eine oder die mehreren geeigneten kontextbewussten OTA-Aktualisierungen an das Fahrzeug auslöst, das in der Netzwerkumgebung verbunden ist.

9. Verteiltes Eindringverwaltungssystem (100) nach Anspruch 8, wobei der mindestens eine Intrusionsdetektionseinheit(IDU)-Sensor (304A), der mit der mindestens einen zentralen Recheneinheit (304B) integriert ist, das verteilte System betrifft.

10. Verteiltes Eindringverwaltungssystem (100) nach Anspruch 8, wobei der eine oder die mehreren Hardwareprozessoren (102) durch die Anweisungen konfiguriert sind zum: Erzeugen, durch die mindestens eine zentrale Recheneinheit (304B), eines vordefinierten Modells basierend auf dem iterativen Trainieren der Daten, die mit dem mindestens einen Ereignis assoziiert sind, das an dem Fahrzeug detektiert wird, das in der Netzwerkumgebung verbunden ist, in Bezug auf das QSEV basierend auf einem überwachten maschinellen Lernen, wobei ein Vertrauenswert für maschinelles Lernen (ML) zum Identifizieren einer Schwachstelle berechnet wird, indem ein oder mehrere Parameter ausgewählt werden, die mit der Schwachstelle assoziiert sind, und wobei ein oder mehrere Parameter mindestens eines von Folgendem betreffen: (i) eine Schwere einer Schwachstelle (V), (ii) eine betroffene Softwareversion (SV), (iii) eine Sicherheitsverfügbarkeit (SF), (iv) eine Abhängigkeit von anderen Softwarekomponentenvoraussetzungen (D), (v) ein Patch-Testing (PT) und (vi) eine Aktualisierungshistorie (UH).

11. Verteiltes Eindringverwaltungssystem (100) nach Anspruch 10, wobei das mindestens eine detektierte Ereignis das QSEV betrifft, wenn das mindestens eine detektierte Ereignis mit einem oder mehreren Attributen in einem historischen Datensatz übereinstimmt, der vorgefüllt ist, wobei das eine oder die mehreren Attribute in dem historischen Datensatz mindestens eines von Folgendem umfassen: (a) Ereignisumfang, (b) Ereigniskontext, (c) Ereignisauswirkung, (d) Ereignisrelevanz, wobei das QSEV eine Umkehrung einer Funktion der Nähe des vordefinierten Datenmodells betrifft, und wobei das vordefinierte Datenmodell einen vortrainierten Datensatz betrifft, der eine oder mehrere Kennzeichnungen für das QSEV umfasst.

12. Verteiltes Eindringverwaltungssystem (100) nach Anspruch 8, wobei die adaptive IPU (306) in einem Band des Hauptdatenstromflusses platziert ist, entweder in einem ruhenden oder einem inaktiven Zustand, wobei die adaptive IPU (306) ein Teilnehmer des IDU-Brokers (308) ist, wobei die adaptive IPU (306) konfiguriert ist, um die Daten von dem IDU-Broker (308) zu empfangen, und wobei eine aktive Zeit der adaptiven IPU (306) mit einer Erhöhung der Flussrate des QSEV zunimmt.

13. Verteiltes Eindringverwaltungssystem (100) nach Anspruch 8, wobei der Schritt des Ausfüllens des Wissensgraphen zum Trainieren des Kontextanalysemodells Folgendes umfasst:
(a) Füllen von Daten, die mit einer historischen Diagnose assoziiert sind, die durch serviceorientierte Fahrzeugdiagnose(SOVD)-APIs gesammelt wurden, in eine historische Diagnosedatenbank, wobei die SOVD-APIs eine Anwendungsprogrammschnittstelle (API) zum Diagnostizieren und Kommunizieren mit dem Fahrzeug sind, das in der Netzwerkumgebung verbunden ist, und wobei die historische Diagnose ein flexibler Standard ist, der einen einheitlichen Zugang zu einem Diagnoseinhalt von HPCs und entsprechenden verwandten Anwendungen und einer oder mehreren ECUs bereitstellt;
(b) Kategorisieren eines oder mehrerer Protokoll-Dumps, die mit einer oder mehreren Fahrzeugspezifikationen assoziiert sind, durch eine oder mehrere Komponentenidentifikationsnummern, wobei der eine oder die mehreren Protokoll-Dumps analysiert werden und geeignete Daten gesammelt und in den Wissensgraphen geschoben werden; und
(c) Kategorisieren relevanter Daten, die in den Wissensgraphen zur Kontextualisierung der abgebildeten Schwachstelle zu füllen sind, basierend auf einem oder mehreren Daten, die mit der Spezifikation des Fahrzeugs assoziiert sind.

14. Verteiltes Eindringverwaltungssystem (100) nach Anspruch 8, wobei die kontextbewusste OTA-Aktualisierung von mindestens einem von Folgendem abhängig ist: (i) einer Einwilligung des Vermögensbesitzers, (ii) einer Software-Kompatibilitätsmatrix und (iii) Verfügbarkeit des Vermögens, und wobei sich das Vermögen auf das Fahrzeug bezieht, das in der Netzwerkumgebung verbunden ist.

15. Ein oder mehrere nichtflüchtige maschinenlesbare Informationsspeichermedien, umfassend eine oder mehrere Anweisungen, die bei Ausführung durch einen oder mehrere Hardwareprozessoren Folgendes bewirken:
Empfangen, an einem Intrusionsdetektionseinheit(IDU)-Broker, von Daten, die mit mindestens einem Ereignis assoziiert sind, das an einem Fahrzeug detektiert wird, das in einer Netzwerkumgebung verbunden ist, wobei das mindestens eine Ereignis durch mindestens einen Intrusionsdetektionseinheit(IDU)-Sensor einer Intrusionsdetektionseinheit (IDU) detektiert wird, und wobei die Intrusionsdetektionseinheit (IDU) als ein verteiltes System implementiert ist;
Verarbeiten, durch die Intrusionsdetektionseinheit (IDU), der Daten, die mit dem mindestens einen Ereignis assoziiert sind, das in dem Fahrzeug detektiert wird, das in der Netzwerkumgebung verbunden ist, um das mindestens eine Ereignis zu klassifizieren, das entweder ein normales Ereignis oder ein qualifiziertes Sicherheitsereignis (QSEV) betrifft;
Erzeugen, durch eine adaptive Intrusionsverhinderungseinheit (IPU), von sanitisierten Daten der adaptiven Intrusionsverhinderungseinheit (IPU), um eine oder mehrere geeignete kontextbewusste Over-the-Air(OTA)-Aktualisierungen zu bestimmen, die einer Schwachstelle entsprechen, beim Empfangen einer Benachrichtigung, die mit dem QSEV assoziiert ist, durch einen Over-the-Air(OTA)-Manager, wobei die sanitisierten Daten der adaptiven Intrusionsverhinderungseinheit (IPU) an einen Over-the-Air(OTA)-Broker in einer Originalausrüstungshersteller(OEM)-Cloud kommuniziert werden, und wobei der Schritt des Erzeugens der sanitisierten Daten der adaptiven Intrusionsverhinderungseinheit (IPU) Folgendes umfasst:
Ausfüllen eines Wissensgraphen zum Trainieren eines Kontextanalysemodells basierend auf einem oder mehreren Eingabedaten, durch die die eine oder die mehreren geeigneten kontextbewussten OTA-Aktualisierungen identifiziert werden, wobei die eine oder die mehreren Eingabedaten mindestens eines von Folgendem betreffen: (a) historische Diagnose, (b) historische Protokollanalyse, (c) Fahrzeugspezifikation und (d) Sicherheit; und
Abrufen, aus einer Patch-Datenbank, von Informationen, die mit der einen oder den mehreren geeigneten kontextbewussten OTA-Aktualisierungen assoziiert sind, die der Schwachstelle entsprechen, zur Abschwächung des entsprechenden QSEV in dem Fahrzeug, wobei der OTA-Manager die eine oder die mehreren geeigneten kontextbewussten OTA-Aktualisierungen an das Fahrzeug auslöst, das in der Netzwerkumgebung verbunden ist.

## Revendications

1. Procédé mis en œuvre par processeur (600) comprenant :
la réception (602), via un ou plusieurs processeurs matériels, au niveau d'un courtier d'unité de détection d'intrusion (IDU) (308), de données associées à au moins un événement détecté au niveau d'un véhicule connecté dans un environnement de réseau, dans lequel l'au moins un événement est détecté par au moins un capteur d'unité de détection d'intrusion (IDU) (304A) d'une unité de détection d'intrusion (IDU) (304), et dans lequel l'unité de détection d'intrusion (IDU) (304) est mise en œuvre sous la forme d'un système distribué ;
le traitement (604), via les un ou plusieurs processeurs matériels, par l'au moins une unité de détection d'intrusion (IDU) (304), des données associées à l'au moins un événement détecté dans le véhicule connecté dans l'environnement de réseau pour classifier l'au moins un événement détecté comme étant soit un événement normal, soit à un événement de sécurité qualifié (QSEV) ;
la génération (606), via les un ou plusieurs processeurs matériels, par une unité de prévention d'intrusion adaptative (IPU) (306), de données assainisées d'unité de prévention d'intrusion adaptative (IPU) pour déterminer une ou plusieurs mises à jour OTA appropriées tenant compte du contexte correspondant à une vulnérabilité, lors de la réception d'une notification associée au QSEV par un gestionnaire par liaison radio (OTA) (316), dans lequel les données assainisées d'unité de prévention d'intrusion adaptative (IPU) sont communiquées à un courtier par liaison radio (OTA) (312) dans un nuage de fabricant d'équipement d'origine (OEM) (206), et dans lequel l'étape de génération des données assainisées d'unité de prévention d'intrusion adaptative (IPU) comprend :
le peuplement (606A) d'un graphe de connaissances pour entraîner un modèle d'analyse contextuelle sur la base d'une ou plusieurs données d'entrée par le biais desquelles les une ou plusieurs mises à jour OTA appropriées tenant compte du contexte sont identifiées, dans lequel les une ou plusieurs données d'entrée se rapportent à au moins l'un parmi : (a) un diagnostic historique, (b) une analyse de journal historique, (c) une spécification de véhicule, et (d) une sécurité ; et
la récupération (608), via les un ou plusieurs processeurs matériels, à partir d'une base de données de correctifs (314), d'informations associées aux une ou plusieurs mises à jour OTA appropriées tenant compte du contexte correspondant à la vulnérabilité, pour l'atténuation du QSEV correspondant dans le véhicule, dans lequel le gestionnaire OTA (316) déclenche les une ou plusieurs mises à jour OTA appropriées tenant compte du contexte au véhicule connecté dans l'environnement de réseau.

2. Procédé mis en œuvre par processeur (600) selon la revendication 1, dans lequel l'au moins un capteur d'unité de détection d'intrusion (IDU) (304A) intégré avec au moins une unité de calcul centrale (304B) se rapporte au système distribué.

3. Procédé mis en œuvre par processeur (600) selon la revendication 1, comprenant en outre la génération, par au moins une unité de calcul centrale (304B), d'un modèle prédéfini sur la base d'un entraînement itératif à partir des données associées à l'au moins un événement détecté au niveau du véhicule connecté dans l'environnement de réseau, par rapport au QSEV sur la base d'un apprentissage automatique supervisé, dans lequel un score de confiance d'apprentissage automatique (ML) est calculé pour identifier une vulnérabilité, en sélectionnant un ou plusieurs paramètres associés à la vulnérabilité, et dans lequel un ou plusieurs paramètres se rapportent à au moins l'un parmi : (i) une gravité d'une vulnérabilité (V), (ii) une version logicielle affectée (SV), (iii) une disponibilité d'un correctif de sécurité (SF), (iv) une dépendance vis-à-vis des prérequis d'autres composants logiciels (D), (v) un test de correctif (PT), et (vi) un historique de mise à jour (UH).

4. Procédé mis en œuvre par processeur (600) selon la revendication 3, dans lequel l'au moins un événement détecté se rapporte au QSEV, si l'au moins un événement détecté correspond à un ou plusieurs attributs d'un ensemble de données historiques prépeuplé, dans lequel les un ou plusieurs attributs dans l'ensemble de données historiques comprennent au moins l'un parmi : (a) une étendue d'événement, (b) un contexte d'événement, (c) un impact d'événement, (d) une pertinence d'événement, dans lequel le QSEV se rapporte à un inverse d'une fonction de proximité du modèle de données prédéfini, et dans lequel le modèle de données prédéfini se rapporte à un ensemble de données préentraîné qui comprennent une ou plusieurs étiquettes pour le QSEV.

5. Procédé mis en œuvre par processeur (600) selon la revendication 1, dans lequel une IPU adaptative (306) est placée dans une bande du flux de données principal, soit dans un état dormant soit dans un état inactif, dans lequel l'IPU adaptative (306) est un abonné au courtier d'IDU (308), dans lequel l'IPU adaptative (306) est configurée pour recevoir les données à partir du courtier d'IDU (308), et dans lequel un temps actif de l'IPU adaptative (306) augmente avec une augmentation du débit du QSEV.

6. Procédé mis en œuvre par processeur (600) selon la revendication 1, dans lequel l'étape de peuplement (606A) du graphe de connaissances pour entraîner le modèle d'analyse contextuelle comprend :
(a) le peuplement, de données associées à un diagnostic historique collecté par le biais d'APIs de diagnostic de véhicule orienté service (SOVD), dans une base de données de diagnostic historique, dans lequel les APIs SOVD sont une interface de programme d'application (API) pour le diagnostic et la communication avec le véhicule connecté dans l'environnement de réseau, et dans lequel le SOVD est une norme flexible qui fournit un accès uniforme à un contenu de diagnostic de HPCs et d'applications associées correspondantes, et une ou plusieurs ECU ;
(b) la catégorisation d'une ou plusieurs décharges de journal associées à une ou plusieurs spécifications de véhicule par le biais d'un ou plusieurs numéros d'identification de composant, dans lequel les une ou plusieurs décharges de journal sont analysées, et des données appropriées sont collectées et poussées vers le graphe de connaissances ; et
(c) la catégorisation, de données pertinentes à peupler dans le graphe de connaissances pour la contextualisation de la vulnérabilité mappée, sur la base d'une ou plusieurs données associées à une spécification du véhicule.

7. Procédé mis en œuvre par processeur (600) selon la revendication 1, dans lequel la mise à jour sensible au contexte OTA dépend d'au moins l'un parmi : (i) un consentement de dépositaire d'actif, (ii) une matrice de compatibilité logicielle, et (iii) une disponibilité de l'actif, et dans lequel l'actif se rapporte au véhicule connecté dans l'environnement de réseau.

8. Système de gestion d'intrusion distribué (100) comprenant :
un véhicule connecté dans un environnement de réseau intégré avec une unité de détection et d'atténuation d'intrusion distribuée (204) ; et
un nuage de fabricant d'équipement d'origine (OEM) (206), dans lequel l'unité de détection et d'atténuation d'intrusion distribuée (204) comprend :
au moins un capteur d'unité de détection d'intrusion (IDU) (304A) ;
au moins une unité de calcul centrale (304B) ;
une mémoire (104) stockant une pluralité d'instructions ;
une ou plusieurs interfaces de communication (106) ; et
un ou plusieurs processeurs matériels (102) couplés à la mémoire (104) via les une ou plusieurs interfaces de communication (106), dans lequel les un ou plusieurs processeurs matériels (102) sont configurés par les instructions pour :
recevoir, au niveau d'un courtier d'unité de détection d'intrusion (IDU) (308), des données associées à au moins un événement détecté au niveau du véhicule connecté dans l'environnement de réseau, dans lequel l'au moins un événement est détecté par l'au moins un capteur d'unité de détection d'intrusion (IDU) (304A) d'une unité de détection d'intrusion (IDU) (304), et dans lequel l'unité de détection d'intrusion (IDU) (304) est mise en œuvre sous la forme d'un système distribué ;
traiter, en utilisant l'unité de détection d'intrusion (IDU) (304), les données associées à l'au moins un événement détecté dans le véhicule connecté dans l'environnement de réseau pour classifier l'au moins un événement détecté comme étant soit un événement normal, soit à un événement de sécurité qualifié (QSEV) ;
générer, en utilisant une unité de prévention d'intrusion adaptative (IPU) (306), des données assainisées d'unité de prévention d'intrusion adaptative (IPU) pour déterminer une ou plusieurs mises à jour OTA appropriées tenant compte du contexte correspondant à une vulnérabilité, lors de la réception d'une notification associée au QSEV par un gestionnaire par liaison radio (OTA) (316), dans lequel les données assainisées d'unité de prévention d'intrusion adaptative (IPU) sont communiquées à un courtier par liaison radio (OTA) (312) dans le nuage de fabricant d'équipement d'origine (OEM) (206), et dans lequel l'étape de génération des données assainisées d'unité de prévention d'intrusion adaptative (IPU) comprend :
le peuplement d'un graphe de connaissances pour entraîner un modèle d'analyse contextuelle sur la base d'une ou plusieurs données d'entrée par le biais desquelles les une ou plusieurs mises à jour OTA appropriées tenant compte du contexte sont identifiées, dans lequel les une ou plusieurs données d'entrée se rapportent à au moins l'un parmi : (a) un diagnostic historique, (b) une analyse de journal historique, (c) une spécification de véhicule, et (d) une sécurité ; et
la récupération, à partir d'une base de données de correctifs (314), d'informations associées aux une ou plusieurs mises à jour OTA appropriées tenant compte du contexte correspondant à la vulnérabilité, pour l'atténuation du QSEV correspondant dans le véhicule, dans lequel le gestionnaire OTA (316) déclenche les une ou plusieurs mises à jour OTA appropriées tenant compte du contexte au véhicule connecté dans l'environnement de réseau.

9. Système de gestion d'intrusion distribué (100) selon la revendication 8, dans lequel l'au moins un capteur d'unité de détection d'intrusion (IDU) (304A) intégré avec l'au moins une unité de calcul centrale (304B) se rapporte au système distribué.

10. Système de gestion d'intrusion distribué (100) selon la revendication 8, dans lequel les un ou plusieurs processeurs matériels (102) sont configurés par les instructions pour : générer, par l'au moins une unité de calcul centrale (304B), un modèle prédéfini sur la base d'un entraînement itératif à partir des données associées à l'au moins un événement détecté au niveau du véhicule connecté dans l'environnement de réseau, par rapport au QSEV sur la base d'un apprentissage automatique supervisé, dans lequel un score de confiance d'apprentissage automatique (ML) est calculé pour identifier une vulnérabilité, en sélectionnant un ou plusieurs paramètres associés à la vulnérabilité, et dans lequel un ou plusieurs paramètres se rapportent à au moins l'un parmi : (i) une gravité d'une vulnérabilité (V), (ii) une version logicielle affectée (SV), (iii) une disponibilité d'un correctif de sécurité (SF), (iv) une dépendance vis-à-vis des prérequis d'autres composants logiciels (D), (v) un test de correctif (PT), et (vi) un historique de mise à jour (UH).

11. Système de gestion d'intrusion distribué (100) selon la revendication 10, dans lequel l'au moins un événement détecté se rapporte au QSEV, si l'au moins un événement détecté correspond à un ou plusieurs attributs d'un ensemble de données historiques prépeuplé, dans lequel les un ou plusieurs attributs dans l'ensemble de données historiques comprennent au moins l'un parmi : (a) une étendue d'événement, (b) un contexte d'événement, (c) un impact d'événement, (d) une pertinence d'événement, dans lequel le QSEV se rapporte à un inverse d'une fonction de proximité du modèle de données prédéfini, et dans lequel le modèle de données prédéfini se rapporte à un ensemble de données préentraîné qui comprennent une ou plusieurs étiquettes pour le QSEV.

12. Système de gestion d'intrusion distribué (100) selon la revendication 8, dans lequel l'IPU adaptative (306) est placée dans une bande du flux de données principal, soit dans un état dormant soit dans un état inactif, dans lequel l'IPU adaptative (306) est un abonné au courtier d'IDU (308), dans lequel l'IPU adaptative (306) est configurée pour recevoir les données à partir du courtier d'IDU (308), et dans lequel un temps actif de l'IPU adaptative (306) augmente avec une augmentation du débit du QSEV.

13. Système de gestion d'intrusion distribué (100) selon la revendication 8, dans lequel l'étape de peuplement du graphe de connaissances pour entraîner le modèle d'analyse contextuelle comprend :
(a) le peuplement, de données associées à un diagnostic historique collecté par le biais d'APIs de diagnostic de véhicule orienté service (SOVD), dans une base de données de diagnostic historique, dans lequel les APIs SOVD sont une interface de programme d'application (API) pour le diagnostic et la communication avec le véhicule connecté dans l'environnement de réseau, et dans lequel le SOVD est une norme flexible qui fournit un accès uniforme à un contenu de diagnostic de HPCs et d'applications associées correspondantes, et une ou plusieurs ECU ;
(b) la catégorisation, d'une ou plusieurs décharges de journal associées à une ou plusieurs spécifications de véhicule par le biais d'un ou plusieurs numéros d'identification de composant, dans lequel les une ou plusieurs décharges de journal sont analysées, et des données appropriées sont collectées et poussées vers le graphe de connaissances ; et
(c) la catégorisation, de données pertinentes à peupler dans le graphe de connaissances pour la contextualisation de la vulnérabilité mappée, sur la base d'une ou plusieurs données associées à une spécification du véhicule.

14. Système de gestion d'intrusion distribué (100) selon la revendication 8, dans lequel la mise à jour sensible au contexte OTA dépend d'au moins l'un parmi : (i) un consentement de dépositaire d'actif, (ii) une matrice de compatibilité logicielle, et (iii) une disponibilité de l'actif, et dans lequel l'actif se rapporte au véhicule connecté dans l'environnement de réseau.

15. Un ou plusieurs supports de stockage d'informations lisibles par machine non transitoires comprenant une ou plusieurs instructions qui, lorsqu'elles sont exécutées par un ou plusieurs processeurs matériels, amènent :
la réception, au niveau d'un courtier d'unité de détection d'intrusion (IDU), de données associées à au moins un événement détecté au niveau d'un véhicule connecté dans un environnement de réseau, dans lequel l'au moins un événement est détecté par au moins un capteur d'unité de détection d'intrusion (IDU) d'une unité de détection d'intrusion (IDU), et dans lequel l'unité de détection d'intrusion (IDU) est mise en œuvre sous la forme d'un système distribué ;
le traitement, par l'unité de détection d'intrusion (IDU), des données associées à l'au moins un événement détecté dans le véhicule connecté dans l'environnement de réseau pour classifier l'au moins un événement détecté comme étant soit un événement normal, soit à un événement de sécurité qualifié (QSEV) ;
la génération, par une unité de prévention d'intrusion adaptative (IPU), de données assainisées d'unité de prévention d'intrusion adaptative (IPU) pour déterminer une ou plusieurs mises à jour OTA appropriées tenant compte du contexte correspondant à une vulnérabilité, lors de la réception d'une notification associée au QSEV par un gestionnaire par liaison radio (OTA), dans lequel les données assainisées d'unité de prévention d'intrusion adaptative (IPU) sont communiquées à un courtier par liaison radio (OTA) dans un nuage de fabricant d'équipement d'origine (OEM), et dans lequel l'étape de génération des données assainisées d'unité de prévention d'intrusion adaptative (IPU) comprend :
le peuplement d'un graphe de connaissances pour entraîner un modèle d'analyse contextuelle sur la base d'une ou plusieurs données d'entrée par le biais desquelles les une ou plusieurs mises à jour OTA appropriées tenant compte du contexte sont identifiées, dans lequel les une ou plusieurs données d'entrée se rapportent à au moins l'un parmi : (a) un diagnostic historique, (b) une analyse de journal historique, (c) une spécification de véhicule, et (d) une sécurité ; et
la récupération, à partir d'une base de données de correctifs, d'informations associées aux une ou plusieurs mises à jour OTA appropriées tenant compte du contexte correspondant à la vulnérabilité, pour l'atténuation du QSEV correspondant dans le véhicule, dans lequel le gestionnaire OTA déclenche les une ou plusieurs mises à jour OTA appropriées tenant compte du contexte au véhicule connecté dans l'environnement de réseau.
